# EUROPEAN PATENT APPLICATION

(11) **EP 4 793 689 A1**
(43) Date of publication of application: **19.08.2026**
(21) Application number: 24916089.6
(22) Date of filing: 12.01.2024
(51) Int. Cl.: G02B 27/01, G02B 5/18, G02C 5/14

(54) **SMART GLASSES**

(71) Applicant: SHENZHEN YIWEN TECH LIMITED, Shenzhen, Guangdong 518055 (CN)
(72) Inventor: OUYANG, Jian, Shenzhen, Guangdong 518000 (CN)
(74) Representative: Agca Kizil, Tugce
(86) International application number: PCT/CN2024/072065
(87) International publication number: WO 2025/148022

(57) **Abstract**

The present application belongs to the technical field of glasses, and relates to a pair of smart glasses. The smart glasses comprise a frame, an imaging optical module, an eye-tracking optical module and an waveguide assembly, wherein the frame comprises rims and a connecting part disposed on one side of each rim, a mounting cavity for the mounting of the imaging optical module and the eye-tracking optical module thereon being formed in the connecting part; and the waveguide assembly is embedded in the rims, and comprises a waveguide substrate, and a first coupling-in and coupling-out grating group and a second coupling-in and coupling-out grating group, which are disposed on the waveguide substrate, at least some gratings in the first coupling-in and coupling-out grating group and the second coupling-in and coupling-out grating group being located on the same side of the waveguide substrate, and the gratings located on the same side of the waveguide substrate, namely, a first periodic grating and a second periodic grating, at least partially overlapping to form a composite grating. The smart glasses in the present application can independently couple in or out light rays of corresponding wavebands in the same region on the same side of a waveguide substrate by means of gratings of a composite grating, and thus effectively reduce the absolute area of the gratings, thereby facilitating a lightweight design and improving long-term wearing comfort.

## Description

### Technical Field

The present application relates to the technical field of glasses, and in particular to a pair of smart glasses.

### Background

Smart glasses are a type of wearable glasses device that, similar to a smartphone, has a standalone operating system and can be installed with software to achieve various functions. For example, augmented reality (AR) glasses are a type of smart wearable device that collects real-world information in real time, superimposes virtual information, images, etc., and enables real-time interaction by various interactive means, so as to assist users in accessing information that is difficult to perceive in the real world by human senses, and have broad application prospects in the fields such as personal audio and video entertainment, simulation training, education, medicine, gaming, military, and aerospace.

To facilitate human-computer interaction and to ensure a form that is more consistent with the form of glasses, existing AR glasses have a display device that generally includes a display imaging device and an eye-tracking device which are mutually independent. For example, the display imaging device includes a light engine, an optical waveguide, and coupling-in and coupling-out gratings. A virtual display image emitted by the light engine reaches the coupling-in grating, is diffracted by the coupling-in grating and then enters a functional layer of the optical waveguide at a specific angle, undergoes total reflection through the functional layer of the optical waveguide, and propagates to and is then diffracted and coupled out through the coupling-out grating to reach the human eye for image formation.

In addition, existing mainstream eye-tracking devices each include an infrared camera and an infrared image light source. The infrared image light source illuminates the human eye, and after being reflected by structures such as the cornea, iris or retina of the human eye, the light carrying human eye feature information is captured by the infrared camera, and is then processed by a relevant signal processor to obtain information such as the movement position of the human eye.

However, since the infrared camera needs to avoid a primary viewing zone for virtual display imaging, it can only be arranged at the periphery of the AR glasses, such as at rims or other positions invisible to the human eye, making it difficult for the infrared camera to capture the entire imaging area of the human eye. Therefore, it is generally necessary to provide a plurality of infrared cameras at positions on the eye side of the glasses, making it difficult to achieve both a lightweight design and an eye-tracking function of the AR glasses.

### Summary

An objective of embodiments of the present application is to solve the technical problem that existing smart glasses, in order to achieve an eye-tracking function, are relatively heavy and bulky, making it difficult to meet the requirements for lightweight design and prolonged wear.

To solve the above technical problem, the embodiments of the present application provide a pair of smart glasses which employs the technical solution as follows.

The smart glasses include:
a frame including rims and a connecting part disposed on one side of each of the rims, a mounting cavity being formed in the connecting part;
an imaging optical module disposed in the mounting cavity and configured to emit imaging light rays carrying image information;
an eye-tracking optical module disposed in the mounting cavity and configured to emit infrared light rays and receive infrared light rays carrying pupil information; and
an waveguide assembly embedded in the rim, the waveguide assembly including a waveguide substrate and a first coupling-in and coupling-out grating group and a second coupling-in and coupling-out grating group disposed on the waveguide substrate, the first coupling-in and coupling-out grating group being configured to couple the imaging light rays into and out of the waveguide substrate, and the second coupling-in and coupling-out grating group being configured to couple the infrared light rays into and out of the waveguide substrate;
where at least some gratings in the first coupling-in and coupling-out grating group and the second coupling-in and coupling-out grating group are located on the same side of the waveguide substrate, and the gratings located on the same side of the waveguide substrate at least partially overlap;
on the same side of the waveguide substrate, a grating in the first coupling-in and coupling-out grating group at an overlapping position is referred to as a first periodic grating, a grating in the second coupling-in and coupling-out grating group corresponding to and overlapping with the first periodic grating is referred to as a second periodic grating, and a combination of the first periodic grating and the corresponding second periodic grating is referred to as a composite grating; and
the first periodic grating and the second periodic grating each include a substrate and a plurality of microstructure units periodically arranged in a one-dimensional direction or a two-dimensional direction, and the microstructure units of the first periodic grating and the microstructure units of the second periodic grating are alternately arranged on a projection plane of the substrate, so as to respectively and independently couple in or couple out the imaging light rays and the infrared light rays in the same region on the same side of the waveguide substrate through the first periodic grating and the second periodic grating.

In a preferred solution of some embodiments, the microstructure units of the first periodic grating are referred to as first microstructure units, the first periodic grating includes a number N of first microstructure units, and the N first microstructure units are arranged in a lateral and/or longitudinal array;
in the first periodic grating, a length of a line connecting centers of two laterally adjacent first microstructure units is defined as a first lateral periodic length, a length of a line connecting centers of two longitudinally adjacent first microstructure units is defined as a first longitudinal periodic length, and an angle between the line connecting the centers of the two laterally adjacent first microstructure units and the line connecting the centers of the two longitudinally adjacent first microstructure units is defined as a first periodic unit interior angle, the first periodic unit interior angle ranging from 90° to 150°;
the microstructure units of the second periodic grating are referred to as second microstructure units, the second periodic grating includes a number M of second microstructure units, and the M second microstructure units are arranged in a lateral and/or longitudinal array;
in the second periodic grating, a length of a line connecting centers of two laterally adjacent second microstructure units is defined as a second lateral periodic length, a length of a line connecting centers of two longitudinally adjacent second microstructure units is defined as a second longitudinal periodic length, and an angle between the line connecting the centers of the two laterally adjacent second microstructure units and the line connecting the centers of the two longitudinally adjacent second microstructure units is defined as a second periodic unit interior angle, the second periodic unit interior angle ranging from 90° to 150°; and
in the composite grating, the first periodic grating and the second periodic grating share the substrate at the overlapping position.

In a preferred solution of some embodiments, in the composite grating, the first microstructure units of the first periodic grating and the second microstructure units of the second periodic grating are spaced apart and alternately arranged on a projection plane of the substrate;
or the first microstructure units and the second microstructure units are alternately arranged on the projection plane of the substrate, and in a direction of height of the substrate, at least some of the first microstructure units are superimposed with corresponding second microstructure units in height.

Compared with the prior art, the smart glasses according to the embodiments of the present application have the following main beneficial effects.

In the smart glasses, both the imaging optical module and the eye-tracking optical module are disposed in the mounting cavity of the connecting part of the frame, so that the eye-tracking optical module is integrated onto the side of the frame corresponding to the imaging optical module and located at the periphery of the portion of the frame proximate to the eye, so as to reduce the volume and weight of the portion of the frame proximate to the eye, which facilitates the lightweight design of the smart glasses, improves the user experience, and makes it convenient for the user for prolonged wear.

Moreover, in the smart glasses, in addition to the imaging optical module and the eye-tracking optical module sharing at least part of the waveguide substrate for propagation, the first coupling-in and coupling-out grating group and the second coupling-in and coupling-out grating group are at least partially located on the same side of the waveguide substrate, and the gratings located on the same side at least partially overlap, so that the overlapping gratings on the same side are integrated to form a composite grating. In this way, by integrating the substrates of the first periodic grating and the second periodic grating in the composite grating into a single substrate such that the microstructure units of the first periodic grating and the second periodic grating are alternately arranged on the projection plane of the substrate, each grating in the composite grating can independently couple in or couple out light rays of corresponding wavebands on the same surface and within the same region of the waveguide substrate by means of adjusting parameters, such as the size, periodic spacing, profile, height and inclination angle of the microstructure units of each grating in the composite grating and incident angles for different wavebands. This effectively reduces the absolute area of the gratings to enable the miniaturized design of the waveguide assembly, which further ensures the lightweight design of the smart glasses and significantly improves the user's wearing comfort.

### Brief Description of the Drawings

To describe the technical solutions in the present application more clearly, the accompanying drawings required for describing the embodiments are briefly introduced below. Apparently, the accompanying drawings in the following description show some embodiments of the present application, and those of ordinary skill in the art may derive other drawings from these accompanying drawings without creative efforts. In the drawings:
FIG. 1 is a schematic perspective exploded view of main parts of a pair of smart glasses according to an embodiment of the present application;
FIG. 2 is a diagram illustrating operating principles of the smart glasses according to a first specific implementation of a first embodiment of the present application, in which a second coupling-in grating is coplanar with and completely overlaps with a first coupling-out grating, and a second coupling-out grating is coplanar with and partially overlaps with a first coupling-in grating;
FIG. 3 is a schematic diagram illustrating principles of combination of a first periodic grating and a second periodic grating of the smart glasses according to the first embodiment of the present application, in which the first periodic grating and the second periodic grating have the same period and are disposed in a fully interleaved manner;
FIG. 4 is a schematic diagram of a planar structure of a composite grating formed by the combination of the first periodic grating and the second periodic grating in FIG. 3;
FIG. 5 is a schematic diagram of a positional arrangement of the first periodic grating and the second periodic grating of the smart glasses according to the first embodiment of the present application, in which the first periodic grating and the second periodic grating have the same period and are disposed in a fully interleaved manner;
FIG. 6 is another schematic diagram illustrating the principles of combination of the first periodic grating and the second periodic grating of the smart glasses according to the first embodiment of the present application, in which the first periodic grating and the second periodic grating have different periods, and microstructure units of the two periodic gratings are superimposed in height at an overlapping position;
FIG. 7 is a distribution map of a planar morphology of microstructure units of a composite grating of the augmented reality glasses according to the embodiments of the present application, in which the horizontal axis represents positions of the microstructure units, and the vertical axis represents heights of the microstructure units;
FIG. 8 is a diagram illustrating operating principles of the smart glasses according to a second specific implementation of the first embodiment of the present application, in which a second coupling-in grating is coplanar with and completely overlaps with a first coupling-out grating, and a second coupling-out grating is non-coplanar with a first coupling-in grating;
FIG. 9 is a diagram illustrating operating principles of the smart glasses according to a third specific implementation of the first embodiment of the present application, in which the second coupling-in grating is non-coplanar with the first coupling-out grating, and the second coupling-out grating is coplanar with and partially overlaps with the first coupling-in grating;
FIG. 10 is a diagram illustrating principles of distribution of the composite grating of the smart glasses on a waveguide substrate according to the first specific implementation of the first embodiment of the present application;
FIG. 11 is a diagram illustrating principles of distribution of the composite grating of the smart glasses on the waveguide substrate according to the second specific implementation and the third specific implementation of the first embodiment of the present application;
FIG. 12 is a diagram illustrating operating principles of a pair of smart glasses according to a second embodiment of the present application, in which at least one composite grating is provided, and a third coupling-in grating and a third coupling-out grating are additionally provided, so as to couple an optical path of a light source to a waveguide substrate;
FIG. 13 is a diagram illustrating principles of distribution of the composite grating of the smart glasses on the waveguide substrate according to the second embodiment of the present application;
FIG. 14 is a diagram illustrating operating principles of a pair of smart glasses according to a third embodiment of the present application, in which an image lens of an image forming unit in the imaging optical module is replaced with a metasurface lens;
FIG. 15 is a diagram illustrating operating principles of a pair of smart glasses according to a first specific implementation of a fourth embodiment of the present application, in which a pupil imaging device of an eye-tracking optical module is integrated into the imaging optical module, and the second coupling-out grating is coplanar with the first coupling-in grating and is positioned within the first coupling-in grating;
FIG. 16 is a diagram illustrating operating principles of the smart glasses according to a second specific implementation of the fourth embodiment of the present application, in which the pupil imaging device of the eye-tracking optical module is integrated into the imaging optical module, and the second coupling-out grating is coplanar with and completely overlaps with the first coupling-in grating;
FIG. 17 is a diagram illustrating principles of distribution of the composite grating of the smart glasses on the waveguide substrate according to the first specific implementation of the fourth embodiment of the present application;
FIG. 18 is a diagram illustrating principles of distribution of the composite grating of the smart glasses on the waveguide substrate according to the second specific implementation of the fourth embodiment of the present application;
FIG. 19 is a diagram illustrating operating principles of a pair of smart glasses according to a fifth embodiment of the present application, in which the waveguide substrate is a multi-layer wave plate;
FIG. 20 is a diagram illustrating principles of distribution of the composite grating of the smart glasses on the waveguide substrate according to the fifth embodiment of the present application; and
FIG. 21 is a perspective structural schematic diagram of the smart glasses according to the embodiments of the present application.

### List of reference signs:

100. Smart glasses; 200. Imaging light ray/visible light; 300. Infrared light ray; 400. Eye;
1. Frame; 11. Rim; 111. Frame hole; 12. Connecting part;
2. Imaging optical module; 21. Image source; 22. Image forming unit; 221. Image lens; 222. Metasurface lens;
3. Eye-tracking optical module; 31. Light source; 32. Pupil imaging device; 321. Pupil camera; 322. Dichroic mirror; 323. Pupil photosensitive element;
4. waveguide assembly; 41. Waveguide substrate; 411. First waveguide layer; 412. Second waveguide layer; 413. Viewing zone; 4131. First grating region; 414. Blind zone; 4141. Second grating region; 42. Composite grating; 421. First periodic grating; 422. Second periodic grating; 423. Substrate; 424. First microstructure unit; 425. Second microstructure unit; 43. First coupling-in grating; 431. First visible light grating region; 44. First coupling-out grating; 441. Second visible light grating region; 45. Second coupling-in grating; 451. First infrared light grating region; 46. Second coupling-out grating; 461. Second infrared light grating region; 47. Third coupling-in grating; 471. Third infrared light grating region; 48. Third coupling-out grating; 481. Fourth infrared light grating region;
5. Temple; 6. Lens; 61. Refractive lens; 7. Rubber ring.

### Detailed Description of Embodiments

Unless otherwise defined, all technical and scientific terms used herein shall have the same meanings as commonly understood by those skilled in the art to which the present application belongs. The terminology used herein in the description is for the purpose of describing specific embodiments only and is not intended to limit the present application, e.g., the terms, such as "length", "width", "upper", "lower", "left", "right", "front", "rear", "vertical", "horizontal", "top", "bottom", "inner", and "outer" indicating an orientation or a positional relationship are based on the orientation or positional relationship shown in the accompanying drawings, which are only for ease of description and shall not be construed as a limitation to the technical solution of the present application.

The terms "comprising" and "having" and any variations thereof in the description and the claims of the present application as well as in the accompanying drawings described above are intended to cover non-exclusive inclusion. It should be noted that the terms "first", "second", etc. in the specification and the claims of the present application or in the accompanying drawings mentioned above are used to distinguish different objects, but are not used to describe a specific order. The meaning of "a plurality of" is two or more, unless specifically defined otherwise.

In the specification, claims and the above description of the accompanying drawings of the present application, when an element is referred to as "fixed to", "mounted on", "disposed on", or "connected to" another element, it may be directly or indirectly located on the other element. For example, when an element is referred to as being "connected to" another element, it may be directly or indirectly connected to the other element.

Furthermore, reference to an "embodiment" herein means that a particular feature, structure, or characteristic described in connection with the embodiment may be included in at least one embodiment of the present application. The phrase at various locations in the specification does not necessarily refer to the same embodiment, nor is it an independent or alternative embodiment mutually exclusive with another embodiment. It is explicitly and implicitly understood by those skilled in the art that the embodiments described herein may be combined with another embodiment.

The embodiments of the present application provide a pair of smart glasses 100. The smart glasses 100 mainly use eye-tracking technology based on a conventional infrared imaging camera, have an eye-tracking function, are also relatively small in overall volume and weight, and can meet the requirements for the lightweight design and prolonged wear of the smart glasses 100.

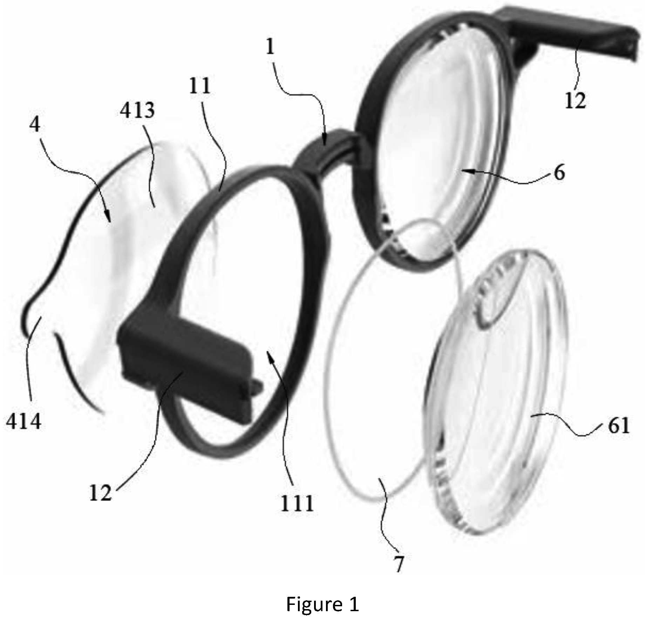

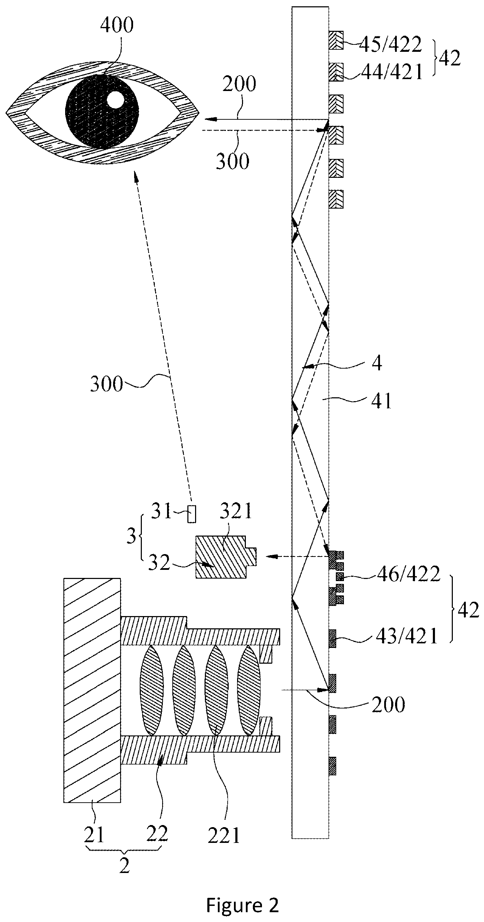

As shown in FIGS. 1 and 2, the smart glasses 100 include a frame 1, an imaging optical module 2, an eye-tracking optical module 3 and an waveguide assembly 4. The frame 1 includes rims 11 and connecting parts 12, the waveguide assembly 4 is embedded in the rims 11, and the connecting parts 12 are disposed on one side of the rims 11.

For example, as shown in FIG. 1, the frame 1 includes two rims 11, one being a left rim and the other being a right rim. The left rim and the right rim are each formed with a frame hole 111 in the middle. One waveguide assembly 4 is embedded in the left rim 11 at a position corresponding to the frame hole 111, and one connecting part 12 is disposed on a left side of the left rim 11. One waveguide assembly 4 is also embedded in the right rim 11 at a position corresponding to the frame hole 111, and one connecting part 12 is also disposed on a right side of the right rim 11. The two connecting parts 12 are respectively located on the left and right sides of the frame 1 in the direction of interpupillary distance.

It should be noted that, as shown in FIG. 1, the smart glasses 100 further include a refractive lens 61 and a rubber ring 7. For example, the refractive lens 61 is stacked with the waveguide assembly 4 in a direction of thickness thereof to form a composite lens 6 with a corresponding function. In this way, the waveguide assembly 4 is combined with different types of refractive lenses 61 to obtain composite glasses that can solve corresponding vision problems such as correcting myopia, hyperopia, astigmatism and presbyopia, thereby expanding the user base of the smart glasses 100. In addition, the rubber ring 7 is disposed at a position in which the lens 6 is embedded in the rim 11, which improves the mounting stability of the lens 6, reduces the friction between the lens 6 and the rim 11, and prevents visual interference and inconvenient cleaning of the lens 6 due to impurities entering a gap between the lens 6 and the rim 11.

In the embodiments of the present application, based on the integrated structure of eye-tracking and virtual display hardware, in order to achieve a lightweight design, a mounting cavity (not shown) is formed in each connecting part 12 of the frame 1, and both the imaging optical module 2 and the eye-tracking optical module 3 are disposed in the mounting cavity. Obviously, the arrangement of the eye-tracking optical modules 3 on the sides of the frame 1 corresponding to the imaging optical modules 2, i.e., on the left and right sides of the frame 1, rather than at the rims 11, significantly reduces the thickness and weight of the rims 11, improves the wearing comfort of the user, and also significantly reduces the difficulty of arranging devices at the rims 11.

Certainly, in practical applications, various electronic components, such as flexible circuit boards, speakers, microphones, storage batteries and antennas, may also be disposed in the mounting cavity to achieve corresponding functions of smart augmented reality glasses. In the embodiments of the present application, the specific electronic components built in the mounting cavity and the details of installation of the electronic components are not specifically limited herein.

In the embodiments of the present application, the imaging optical module 2 is mainly configured such that imaging light rays 200 carrying virtual image information are emitted and projected into the user's field of view through an optical component such as the lens 6, so as to superimpose and display a virtual image and a real-world image, thereby achieving an augmented reality effect. The eye-tracking optical module 3 is mainly configured to emit infrared light rays 300 and receive infrared light rays 300 carrying pupil information.

It should be understood that, specifically in the embodiments of the present application, as shown in FIGS. 1 and 2, each eye 400 corresponds to one rim 11, one connecting part 12, one waveguide substrate 41, one imaging optical module 2 and one eye-tracking optical module 3. Since the structures corresponding to the two eyes 400 are basically the same, for ease of description, one of the eyes 400 will be taken as an example for description.

In the embodiments of the present application, in order to enable the propagation of the imaging light rays 200 carrying virtual image information, the infrared light rays 300, and the infrared light rays 300 carrying pupil information to share at least part of an optical path so as to reduce the volume and weight of the smart glasses 100, the waveguide assembly 4 includes a waveguide substrate 41, and a first coupling-in and coupling-out grating group and a second coupling-in and coupling-out grating group disposed on the waveguide substrate 41. The first coupling-in and coupling-out grating group is configured to couple the imaging light rays 200 carrying virtual image information emitted by the imaging optical module 2 into and out of the waveguide substrate 41, so that the imaging light rays 200 are projected from the position of the waveguide substrate 41 facing the eye 400 to the eye 400, and then superimposed and displayed with a real-world image received by the eye 400, thereby improving the user's augmented reality experience.

Similarly, the second coupling-in and coupling-out grating group is configured to couple the infrared light rays 300 and the infrared light rays 300 carrying pupil information into and out of the waveguide substrate 41, so that the infrared light rays 300 directly emitted by the eye-tracking optical module 3 or the infrared light rays 300 carrying pupil information reflected by the eye 400 are coupled into and out of the waveguide substrate 41, the eye-tracking optical module 3 and the imaging optical module 2 share at least part of the waveguide substrate 41 for signal transmission, and the infrared light rays 300 carrying pupil information finally propagate to the side of the imaging optical module.

For example, when the infrared light rays 300 are directly projected from the side of the frame 1 corresponding to the imaging optical module 2 to the corresponding eye 400, the second coupling-in and coupling-out grating group is mainly configured such that the infrared light rays 300 carrying pupil information reflected by the eye 400 are coupled into and out of the waveguide substrate 41, and are then projected into an optical device corresponding to the eye-tracking optical module 3 located on the side of the frame 1 corresponding to the imaging optical module 2. When the infrared light rays 300 are projected into the eye 400 through the waveguide substrate 41 on the side of the frame 1 corresponding to the imaging optical module 2, the second coupling-in and coupling-out grating group is mainly configured such that the infrared light rays 300 are coupled into and out of the waveguide substrate 41 and then projected into the eye 400, and is also configured such that the infrared light rays 300 carrying pupil information reflected by the eye 400 are coupled to the waveguide substrate 41 into and out of the waveguide substrate 41 and are then projected into an optical device corresponding to the eye-tracking optical module 3 located on the side of the frame 1 corresponding to the imaging optical module 2.

It should be understood that in the smart glasses 100, since both the first coupling-in and coupling-out grating group and the second coupling-in and coupling-out grating group are disposed on the waveguide substrate 41 directly in front of the eye 400, on the basis of the design principles of diffraction gratings of the waveguide substrate 41, the imaging optical module 2 and the eye-tracking optical module 3 share at least part of optical path for propagation through the waveguide substrate 41, so that each light ray coupled out of the waveguide substrate 41 is projected into the eye 400 from directly in front of the eye 400, and the infrared light rays 300 carrying pupil information reflected by the eye 400 are projected into the waveguide substrate 41 for propagation and then projected into the eye-tracking optical module 3. This can improve the quality of the infrared light rays 300 carrying pupil information captured by the eye-tracking optical module 3, so as to achieve a better range of angles of view, illumination range and illumination angle and solve the key problem that the pupil imaging device 32 of the eye-tracking optical module 3 cannot be arranged in the center in front of the eye; facilitates the eye-tracking optical module 3 to use fewer light sources 31 and/or pupil imaging devices 32 to achieve an eye-tracking effect comparable to or better than traditional solutions; and can further reduce the weight, volume and manufacturing cost of the smart glasses 100.

In the embodiments of the present application, in order to further reduce the volume and weight of the smart glasses 100, at least some gratings in the first coupling-in and coupling-out grating group and the second coupling-in and coupling-out grating group are located on the same side of the waveguide substrate 41, and the gratings located on the same side of the waveguide substrate 41 at least partially overlap. Specifically, on the same side of the waveguide substrate 41, a grating in the first coupling-in and coupling-out grating group at an overlapping position is referred to as a first periodic grating 421, and a grating in the second coupling-in and coupling-out grating group overlapping with the first periodic grating 421 is referred to as a second periodic grating 422. A combination of the first periodic grating 421 and the corresponding second periodic grating 422 is referred to as a composite grating 42.

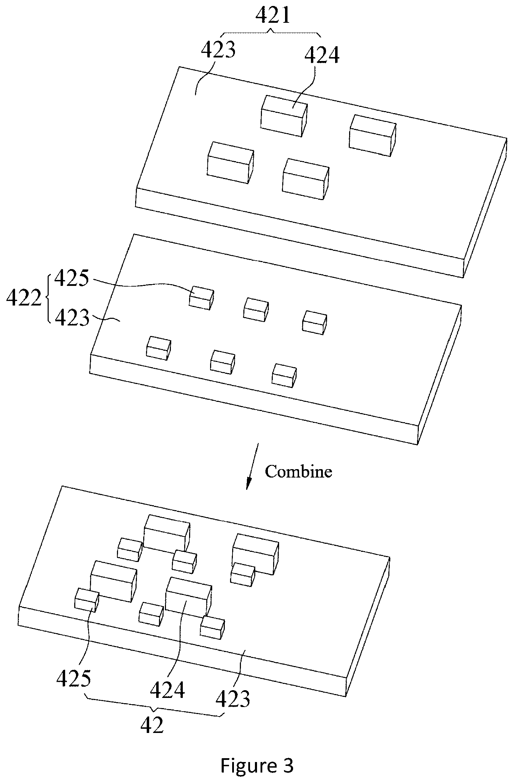

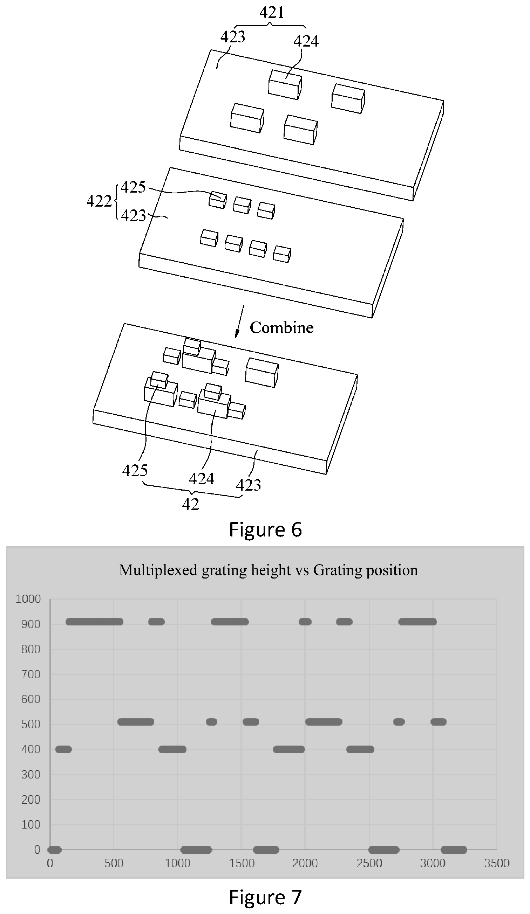

In the embodiments of the present application, as shown in FIGS. 3 and 6, the first periodic grating 421 and the second periodic grating 422 each include a substrate 423 and a plurality of microstructure units. The microstructure units are periodically arranged in a one-dimensional direction or a two-dimensional direction, and the microstructure units of the first periodic grating 421 and the microstructure units of the second periodic grating 422 are alternately arranged on a projection plane of the substrate 423, so that the imaging light rays 200 and the infrared light rays 300 are respectively and independently coupled in or coupled out of the same region on the same side of the waveguide substrate 41 through the first periodic grating 421 and the second periodic grating 422.

It should be understood that at least one composite grating 42 is provided on the waveguide substrate 41, and by integrating the substrates 423 of the plurality of gratings into one substrate such that the microstructure units of the plurality of gratings are alternately arranged, it is possible to separately modulate different wavebands in the same region of the same surface by means of designing parameters such as the size, periodic spacing, profile, height and inclination of the microstructure units of each grating in the composite grating 42, and different incident angles for different wavebands, so as to independently couple in or couple out light rays of different wavebands in the same region on the same side. Thus, it is also possible to effectively reduce the absolute area of the gratings while respectively controlling different wavebands, which facilitates a miniaturized design of the waveguide assembly 4.

For example, in the embodiments of the present application, at least one composite grating 42 is disposed on the waveguide substrate 41. The imaging light rays 200 and the infrared light rays 300 may be respectively modulated by means of adjusting parameters, such as the size, periodic spacing, profile, height and inclination angle of the microstructure units of the first periodic grating 421 and the second periodic grating 422 of the composite grating 42 and different incident angles of the imaging light rays 200 and the infrared light rays 300, so that the imaging light rays 200 and the infrared light rays 300 are independently coupled in or coupled out in the same region on the same side.

It should be noted that the first periodic grating 421 and the second periodic grating 422 may each be a one-dimensional grating, or a two-dimensional grating. In addition, the first periodic grating 421 can independently modulate the imaging light rays 200, for example, it can modulate visible light 200 in, but not limited to, a waveband ranging from 492 nm to 577 nm. The second periodic grating 422 can modulate the infrared light rays 300, for example, it can modulate the infrared light rays in, but not limited to, a waveband ranging from 300 of 750 nm to 1000 nm.

For example, in the embodiments of the present application, the imaging light rays 200 are generally visible light 200. In addition, to ensure the lightweight design of the smart glasses 100, the waveguide substrate 41 has a thickness ranging from 0.2 mm to 10 mm.

It should be noted that the waveguide substrate 41 is typically made of a transparent material. Specifically, the transparent material includes, but is not limited to, glass, plastic, etc. Certainly, the waveguide substrate 41 may also be made of a material with a specific color, and the material of the waveguide substrate 41 is not particularly limited herein.

In summary, compared with the prior art, the smart glasses 100 have at least the following beneficial effects. In the smart glasses 100, both the imaging optical module 2 and the eye-tracking optical module 3 are disposed in the mounting cavity of the connecting part 12 of the frame 1, so that the eye-tracking optical module 3 is integrated onto the side of the frame 1 corresponding to the imaging optical module 2 and located at the periphery of the portion of the frame 1 proximate to the eye, so as to reduce the volume and weight of the portion of the frame 1 proximate to the eye, which facilitates the lightweight design of the smart glasses 100 and improves the user experience.

Moreover, in the smart glasses 100, in addition to the imaging optical module 2 and the eye-tracking optical module 3 sharing at least part of the waveguide substrate 41 for propagation, the first coupling-in and coupling-out grating group and the second coupling-in and coupling-out grating group are at least partially located on the same side of the waveguide substrate 41, and the gratings located on the same side at least partially overlap, so that the overlapping gratings on the same side are integrated to form a composite grating 42. In this way, by integrating the substrates 423 of the first periodic grating 421 and the second periodic grating 422 in the composite grating 42 into a single substrate such that their microstructure units are alternately arranged on the projection plane of the substrate 423, each grating in the composite grating 42 can independently couple in or couple out light rays of the corresponding wavebands in the same region on the same side of the waveguide substrate 41 by means of adjusting parameters, such as the size, periodic spacing, profile, height and inclination angle of the microstructure units of each grating in the composite grating 42 and different incident angles for different wavebands. This effectively reduces the absolute area of the gratings to enable the miniaturized design of the waveguide assembly 4, which further ensures the lightweight design of the smart glasses 100 and significantly improves the user's wearing comfort.

### First embodiment of the smart glasses 100 of the present application

To make those skilled in the art better understand the solution of the present application, the technical solution in the first embodiment of the present application will be clearly and completely described below with reference to FIGS. 1 to 11.

In a specific implementation of the first embodiment of the present application, as shown in FIGS. 3 to 6, in the composite grating 42, for ease of description, the microstructure units of the first periodic grating 421 are referred to as first microstructure units 424, and the microstructure units of the second periodic grating 422 are referred to as second microstructure units 425. To achieve the staggered arrangement of the microstructure units when the first periodic grating 421 and the second periodic grating 422 are combined. The first periodic grating 421 includes a number N of first microstructure units 424, and the N first microstructure units 424 are arranged in a lateral and/or longitudinal array. Correspondingly, the second periodic grating 422 includes a number M of second microstructure units 425, and the M second microstructure units 425 are arranged in a lateral and/or longitudinal array.

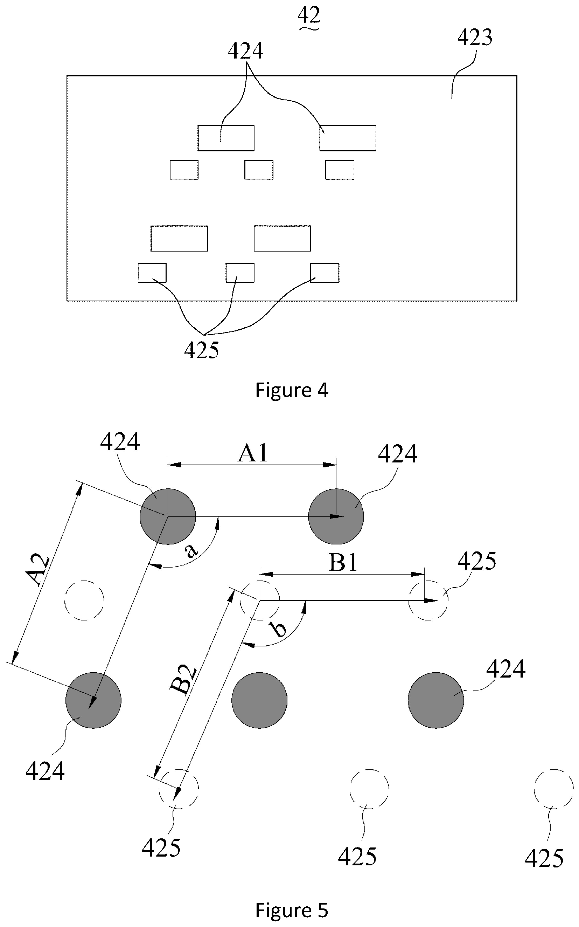

As shown in FIG. 5, in one first periodic grating 421, a length of a line connecting centers of two laterally adjacent first microstructure units 424 is defined as a first lateral periodic length A1, and a length of a line connecting centers of two longitudinally adjacent first microstructure units 424 is defined as a first longitudinal periodic length A2. In addition, an angle between the line connecting the centers of the two laterally adjacent first microstructure units 424 and the line connecting the centers of the two longitudinally adjacent first microstructure units 424 is defined as a first periodic unit interior angle a, the first periodic unit interior angle a ranging from 90° to 150°.

Correspondingly, as shown in FIG. 5 again, in one second periodic grating 422, a length of a line connecting centers of two laterally adjacent second microstructure units 425 is defined as a second lateral periodic length B1, and a length of a line connecting centers of two longitudinally adjacent second microstructure units 425 is defined as a second longitudinal periodic length B2. An angle between the line connecting the centers of the two laterally adjacent second microstructure units 425 and the line connecting the centers of the two longitudinally adjacent second microstructure units 425 is defined as a second periodic unit interior angle b, the second periodic unit interior angle b ranging from 90° to 150°.

It should be understood that when designing the composite grating 42, light rays of different wavebands can be modulated directly by means of adjusting parameters, such as the first lateral periodic length A1, the first longitudinal periodic length A2 and the first periodic unit interior angle a of the first periodic grating 421, and the second lateral periodic length B1, the second longitudinal periodic length B2 and the second periodic unit interior angle b of the second periodic grating 422, so that the light rays of each waveband can be independently coupled in or coupled out in the same region on the same side of the waveguide substrate 41.

Preferably, to simplify the composite structure of the first periodic grating 421 and the second periodic grating 422, the second lateral periodic length B1, the second longitudinal periodic length B2 and the second periodic unit interior angle b of the second periodic grating 422 are equal to the first lateral periodic length A1, the first longitudinal periodic length A2, and the first periodic unit interior angle a of the first periodic grating 421, respectively. The first lateral periodic length A1 of the first periodic grating 421 preferably ranges from 150 nm to 2 um, and the first longitudinal periodic length A2 preferably ranges from 150 nm to 2 um. Therefore, the second lateral periodic length B1 of the second periodic grating 422 preferably ranges from 150 nm to 2 um, and the second longitudinal periodic length B2 preferably ranges from 150 nm to 2 um.

It should be noted that the circles shown in FIG. 5 represent the positions of the respective microstructure units on the substrate 423, and do not indicate the shape, size, height, etc. of the microstructure units. In addition, in the composite grating 42, the first periodic grating 421 and the second periodic grating 422 may be in the shape including, but not limited to, a circle, an ellipse, a quadrilateral, a hexagon or an irregular shape.

For example, in the first embodiment of the present application, as shown in FIGS. 3 and 6, the first microstructure units 424 of the first periodic grating 421 and the second microstructure units 425 of the second periodic grating 422 are both prismatic with a quadrilateral cross-section. Specifically, the first microstructure unit 424 has a side length preferably ranging from 150 nm to 2 um, and has a height preferably ranging from 10 nm to 2 um. Correspondingly, to simplify the structure of the composite grating 42, the second microstructure unit 425 of the second periodic grating 422 has a side length also preferably ranging from 150 nm to 2 um, and has a height also preferably ranging from 10 nm to 2 um. That is, the first microstructure units 424 of the first periodic grating 421 and the second microstructure units 425 of the second periodic grating 422 may have the same or similar shape, and may be the same or different in size, which are all within the same limited range, and the parameters can be specifically adjusted according to actual requirements.

In the first embodiment of the present application, in order to facilitate the combination of the first periodic grating 421 and the second periodic grating 422 and to simplify the structure of the composite grating 42 to reduce the absolute area and volume of the composite grating 42, the first periodic grating 421 and the second periodic grating 422 share the substrate 423 at the overlapping position in the composite grating 42.

For example, when the first periodic grating 421 completely overlaps with the second periodic grating 422, the substrate 423 of the formed composite grating 42 is the substrate 423 of the first periodic grating 421 or the second periodic grating 422.

Alternatively, in the first periodic grating 421 and the second periodic grating 422, when the projection of the second periodic grating 422 on the waveguide substrate 41 is completely located within the position range of the first periodic grating 421 but the periodic gratings have different sizes, the substrate 423 of the formed composite grating 42 is the substrate 423 of the first periodic grating 421.

Alternatively, when the first periodic grating 421 partially overlaps with the second periodic grating 422, the portion of the substrate 423 at the overlapping position of the periodic gratings is a portion of the substrate 423 of the first periodic grating 421 or the second periodic grating 422, and the portions of the substrates 423 not at the overlapping position are still their respective substrates 423.

Preferably, in order to reduce the volume of the composite grating 42 and facilitate the lightweight design of the smart glasses 100, the first periodic grating 421 and the second periodic grating 422 each have a thickness ranging from 10 nm to 2 um.

In the composite grating 42, in order to enable the alternating arrangement and combination of the microstructure units of the first periodic grating 421 and the second periodic grating 422, as shown in FIGS. 3 and 4, in a first specific implementation of the first embodiment of the present application, the first microstructure units 424 of the first periodic grating 421 and the second microstructure units 425 of the second periodic grating 422 are spaced apart and alternately arranged on the projection plane of the substrate 423. In this way, the first microstructure units 424 and the second microstructure units 425 are only periodically combined in the same region of the substrate 423 but are not superimposed in height, that is, the first microstructure units 424 and the second microstructure units 425 still maintain their original shapes and sizes.

Alternatively, in a second specific implementation of the first embodiment of the present application, as shown in FIG. 6, the first microstructure units 424 and the second microstructure units 425 are alternately arranged on the projection plane of the substrate 423, and in the direction of height of the substrate 423, at least some of the first microstructure units 424 are superimposed with corresponding second microstructure units 425 in height. It should be understood that the first microstructure units 424 and the second microstructure units 425 may overlap on the projection plane of the substrate 423, and in this case, the heights of the overlapping portions are superimposed.

For example, when the first periodic grating 421 and the second periodic grating 422 are each a one-dimensional grating, in the composite grating 42, the microstructure units at *x* have a total height H(*x*) satisfying a shape condition constraint defined by Equation 1 specifically as follows: $H \left(x\right) = {G}_{1} \left(x\right) + {G}_{2} \left(x\right)$

In Equation 1, *G*₁(*x*) represents a height of the first microstructure unit 424 of the first periodic grating 421 at *x*; *G*₂(*x*) represents a height of the second microstructure unit 425 of the second periodic grating 422 at *x. G*₁(*x*) and *G*₂(*x*) satisfy Equation 2 and Equation 3, respectively: ${G}_{1} \left(x\right) = \left\{\begin{matrix}{h}_{1} , if \left(mod\left(\left|x-{x}_{1}\right|, {P}_{1}\right)\leq {P}_{1}/2\right. \\ 0 , else\end{matrix}\right.$ ${G}_{2} \left(x\right) = \left\{\begin{matrix}{h}_{2} , if \left(mod\left(\left|x-{x}_{2}\right|, {P}_{2}\right)\leq {P}_{2}/2\right. \\ 0 , else\end{matrix}\right.$

In Equation 2, *h*₁ represents the height of the first microstructure unit 424 of the first periodic grating 421, *x*₁ represents a lateral offset distance of the first microstructure unit 424, and *P*₁ represents a period of the first periodic grating 421. Equation 2 indicates that if the remainder obtained by dividing the absolute difference between the x-coordinate *x* of the position of the first microstructure unit 424 and a lateral offset distance *x*₁ by the period *P*₁ of the first periodic grating 421 is less than or equal to half the period of the first periodic grating 421, the height of the first microstructure unit 424 at *x* is *h*₁; otherwise, the height is 0.

Similarly, in Equation 3, *h*₂ represents the height of the second microstructure unit 425, *x*₂ represents the lateral offset distance of the second microstructure unit 425, and *P*₂ represents the period of the second periodic grating 422. Equation 3 indicates that if the remainder obtained by dividing the absolute difference between the x-coordinate *x* of the position of the second microstructure unit 425 and a lateral offset distance *x*₂ by the period *P*₂ of the second periodic grating 422 is less than or equal to half the period of the second periodic grating 422, the height of the second microstructure unit 425 at *x* is *h*₂; otherwise, the height is 0.

Moreover, in the composite grating 42, both the first periodic grating 421 and the second periodic grating 422 also satisfy Equation 4 as follows: $P \left(sini\pm sinθ\right) = mλ$

Specifically, in Equation 4, P represents the grating period, *i* represents an incident angle of corresponding light rays; ± represents different diffraction spectrum types, a plus sign being taken when incident light and diffracted light are located on the same side of a normal of a corresponding grating, and conversely, a minus sign being taken when located on opposite sides; θ represents the diffraction angle of the corresponding light rays; *m* represents the diffraction order, generally +1st or -1st order; and *λ* represents the wavelength of incident light of the corresponding light rays.

More specifically, the diffraction angle θ of the corresponding light rays needs to satisfy the following: a diffraction angle of the imaging light rays 200 is greater than a critical angle of total reflection of the waveguide substrate, and an incident angle of the infrared light rays 300 is greater than the critical angle of total reflection of the waveguide substrate.

In addition, in an example in which both the first periodic grating 421 and the second periodic grating 422 are one-dimensional gratings, the law of total reflection satisfies Equation 5 as follows: ${sinθ}_{0} = 1 / n$

In Equation 5, *θ*₀ represents the critical angle of total reflection of the waveguide substrate, and n represents a medium refractive index. For example, if the medium refractive index n is 1.5, the critical angle of total reflection *θ*₀ of the waveguide substrate is 41.8°.

For example, the incident angle of the imaging light rays 200 is a, the diffraction angle is b, the incident angle of the infrared light rays 300 carrying pupil information is c, and the diffraction angle is d, where b > *θ*₀, and c > *θ*₀.

It should be noted that through Equation 1 to Equation 5, the diffraction efficiency of the first periodic grating 421 and the second periodic grating 422 can be optimally designed to ultimately obtain appropriate grating shapes and output effects, and also ultimately obtain a general distribution profile of height of the composite grating 42, that is, the morphology of the microstructure units in the composite grating 42.

For example, if the period of the first periodic grating 421 is 490 nm, the imaging light rays 200 enter the waveguide substrate 41 at an incident angle ranging from 0° to 20° that satisfies the total reflection condition, the lateral offset distance *x*₁ of the first microstructure unit 424 of the first periodic grating 421 is 310 nm, and the height *h*₁ of the first periodic grating 421 is 400 nm. Correspondingly, the period of the second periodic grating 422 is 735 nm, the infrared light rays 300 enters the waveguide substrate 41 at an incident angle ranging from 42° to 80° and is diffracted and coupled out of the waveguide substrate 41 at an angle ranging from 20° to 35°, the lateral offset distance *x*₂ of the second microstructure unit 425 of the second periodic grating 422 is 410 nm, and the height *h*₂ of the second periodic grating 422 is 510 nm. The ultimately obtained general distribution profile of height of the composite grating 42 can be referred to FIG. 7.

It should be noted that if both the first periodic grating 421 and the second periodic grating 422 are two-dimensional gratings, the principles of combination along the x direction and the y direction is the same as that of one-dimensional gratings, and will not be repeated here in detail.

In the first embodiment of the present application, as shown in FIGS. 2, 8 and 9, the waveguide substrate 41 may typically be a single-layer wave plate. Certainly, in other embodiments, the waveguide substrate 41 may also be a multi-layer wave plate, and the structure of the waveguide substrate 41 is not specifically limited herein.

As shown in FIGS. 2, 8 and 9 again, in order to achieve the eye-tracking function, the eye-tracking optical module 3 includes a light source 31 and a pupil imaging device 32. The light source 31 is mainly configured to emit infrared light rays 300 toward an eye 400. Specifically, in the first embodiment, the light source 31 directly emits infrared light rays 300 toward the eye 400. The pupil imaging device 32 is mainly configured to receive the infrared light rays 300 carrying pupil information emitted from the waveguide substrate 41, so as to perform gaze point tracking, eye movement analysis, eyeball parameter measurement, etc. on the user in combination with sensors and corresponding algorithms.

It should be noted that in the embodiments of the present application, the imaging light rays 200 may be visible light 200, specifically light with a wavelength ranging from 400 nm to 650 nm. The infrared light rays 300 may be infrared light 300, specifically light with a wavelength ranging from 700 nm to 1200 nm. Certainly, in other embodiments, the imaging light rays 200 and the infrared light rays 300 may also be other types of light rays, which are not specifically limited herein.

For example, when the infrared light rays 300 are infrared light, the light source 31 of the eye-tracking optical module 3 is typically an infrared light source 300, and the pupil imaging device 32 is typically an infrared camera or an infrared video camera.

To project the imaging light rays 200 emitted by the imaging optical module 2 to the eye 400 through the waveguide substrate 41, the first coupling-in and coupling-out grating group includes a first coupling-in grating 43 and a first coupling-out grating 44 located on the same side of the waveguide substrate 41. Specifically, both the first coupling-in grating 43 and the first coupling-out grating 44 are located on the side of the waveguide substrate 41 away from the eye 400.

In addition, to project the infrared light rays 300 carrying pupil information reflected by the eye 400 to the pupil imaging device 32 through the waveguide substrate 41, the second coupling-in and coupling-out grating group includes a second coupling-in grating 45 and a second coupling-out grating 46. The second coupling-in grating 45 is mainly configured to couple the infrared light rays 300 reflected by the eye 400 into the waveguide substrate 41 for propagation, and the second coupling-out grating 46 is mainly configured such that the infrared light rays 300 propagating through the waveguide substrate 41 is coupled out of the waveguide substrate and received by the pupil imaging device 32.

In the first embodiment of the present application, as shown in FIGS. 2, 8 and 9, the first coupling-out grating 44 is located directly in front of the eye 400, which enables the imaging light rays 200 carrying virtual image information emitted by the imaging optical module 2 to be coupled out of the waveguide substrate 41 through the first coupling-out grating 44 and projected to the eye 400 directly in front of the eye 400, thereby achieving a better virtual reality effect.

Similarly, the second coupling-in grating 45 is also located directly in front of the eye 400, so that the infrared light rays 300 carrying pupil information reflected by the eye 400 can be emitted toward the second coupling-in grating 45. Thus, on the one hand, the pupil imaging device 32 of the eye-tracking optical module 3 can obtain the infrared light rays 300 carrying pupil information from directly in front of the eye 400, which solves the key problem that the pupil imaging device 32 cannot be arranged in the center in front of the eye and achieves the same or better eye-tracking effect using a smaller number of pupil imaging devices 32, thereby reducing the weight and cost of the smart glasses 100; on the other hand, it is also conducive to reducing the requirements on the illumination range and illumination angle of the light source 31 of the eye-tracking optical module 3.

It should be noted that in the embodiments of the present application, the first coupling-in grating 43 and the first coupling-out grating 44 may be reflective diffraction gratings. When the second coupling-out grating 46 is coplanar with the first coupling-in grating 43, the second coupling-out grating 46 is a reflective diffraction grating. Alternatively, when the second coupling-out grating 46 is non-coplanar with the first coupling-in grating 43, the second coupling-out grating 46 is a transmissive diffraction grating. Alternatively, when the second coupling-in grating 45 is coplanar with the first coupling-out grating 44, the second coupling-in grating 45 is a reflective diffraction grating. Alternatively, when the second coupling-in grating 45 is non-coplanar with the first coupling-out grating 44, the second coupling-in grating 45 is a transmissive diffraction grating.

In addition, in the first embodiment of the present application, the first coupling-in grating 43 and the first coupling-out grating 44 of the first coupling-in and coupling-out grating group and the second coupling-in grating 45 and the second coupling-out grating 46 of the second coupling-in and coupling-out grating group are arranged on the waveguide substrate 41 in various manners, and the gratings also have various specific structures, which are not listed individually here. However, regardless of the arrangement of the gratings, it is necessary to form at least one composite grating 42 on the waveguide substrate 41, and the composite grating 42 may be formed in various manner specifically at least the as follows.

In the first specific implementation of the first embodiment, the second coupling-in grating 45 is coplanar with and at least partially overlaps with the first coupling-out grating 44, and the second coupling-out grating 46 is coplanar with the first coupling-in grating 43. The second coupling-in grating 45 may partially overlap or completely overlap with the first coupling-out grating 44. Similarly, the second coupling-out grating 46 and the first coupling-in grating 43 may partially overlap, completely overlap, or be completely offset from each other, which may be determined according to actual requirements.

It should be understood that when the second coupling-in grating 45 is coplanar with and at least partially overlaps with the first coupling-out grating 44, the second coupling-in grating 45 and the first coupling-out grating 44 together form a composite grating 42, and the first coupling-out grating 44 and the second coupling-in grating 45 are respectively the first periodic grating 421 and the second periodic grating 422 of the composite grating 42. Similarly, if the second coupling-out grating 46 is coplanar with and at least partially overlaps with the first coupling-in grating 43, the second coupling-out grating 46 and the first coupling-in grating 43 together form a further composite grating 42, and the first coupling-in grating 43 and the second coupling-out grating 46 are respectively the first periodic grating 421 and the second periodic grating 422 of the further composite grating 42. That is, in this case, two composite gratings 42 may be disposed on the waveguide substrate 41.

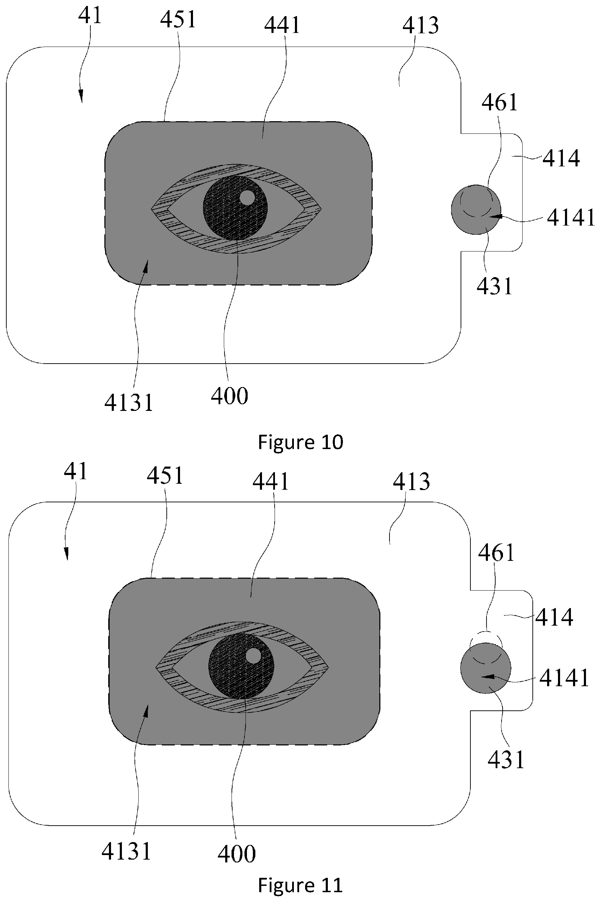

It should be noted that, as shown in FIGS. 1 and 10, for ease of description and reasonable arrangement of the respective gratings of the composite grating 42 disposed in the waveguide substrate 41, the region of the waveguide substrate 41 corresponding to the eye 400 is referred to as a viewing zone 413; and the region of the waveguide substrate 41 corresponding to the connecting part 12 of the frame 1 is referred to as a blind zone 414 because it is invisible to the eye 400. As shown in FIG. 10, the region within the viewing zone 413 that is located directly in front of the eye 400 and on which gratings are disposed is referred to as a first grating region 4131; and the region within the blind zone 414 on which gratings are disposed is referred to as a second grating region 4141.

Specifically, the region corresponding to the first coupling-in grating 43 is referred to as a first visible light grating region 431, which is located in the second grating region 4141; the region corresponding to the first coupling-out grating 44 is referred to as a second visible light grating region 441, which is located in the first grating region 4131; the region corresponding to the second coupling-in grating 45 is referred to as a first infrared light grating region 451, and is located in the first grating region 4131; and the region corresponding to the second coupling-out grating 46 is referred to as a second infrared light grating region 461, and is located in the second grating region 4141. That is, the second visible light grating region 441 and the first infrared light grating region 451 are formed in the first grating region 4131, and the first visible light grating region 431 and the second infrared light grating region 461 are formed in the second grating region 4141.

For example, as shown in FIGS. 2 and 10, the second coupling-in grating 45 is coplanar with and completely overlaps with the first coupling-out grating 44, and the second coupling-out grating 46 is coplanar with and at least partially overlaps the first coupling-in grating 43.

Specifically, in this example, as shown in FIGS. 2 and 10 again, the first coupling-out grating 44, the second visible light grating region 441 corresponding to the first coupling-out grating 44, the second coupling-in grating 45, and the first infrared light grating region 451 corresponding to the second coupling-in grating 45 are all located in the first grating region 4131 of the viewing zone 413 of the waveguide substrate 41 and directly in front of the eye 400; and the second coupling-in grating 45 and the first coupling-out grating 44 are located on the same side of the waveguide substrate 41, and the first infrared light grating region 451 corresponding to the second coupling-in grating 45 and the second visible light grating region 441 corresponding to the first coupling-out grating 44 completely overlap.

The first coupling-in grating 43, the first visible light grating region 431 corresponding to the first coupling-in grating 43, the second coupling-out grating 46, and the second infrared light grating region 461 corresponding to the second coupling-out grating 46 are all located in the second grating region 4141 of the blind zone 414 of the waveguide substrate 41. The second coupling-out grating 46 and the first coupling-in grating 43 are located on the same side of the waveguide substrate 41, and the projection of the second infrared light grating region 461 corresponding to the second coupling-out grating 46 is located within the first visible light grating region 431 corresponding to the first coupling-in grating 43 (referring to FIG. 10), that is, the second coupling-out grating 46 and the first coupling-in grating 43 partially overlap.

For another example, in the first specific implementation of the first embodiment, both the first coupling-in grating 43 and the first coupling-out grating 44 are reflective diffraction gratings, and both the second coupling-in grating 45 and the second coupling-out grating 46 are reflective diffraction gratings, where the reflective diffraction gratings include, but are not limited to, surface relief gratings or volume holographic gratings.

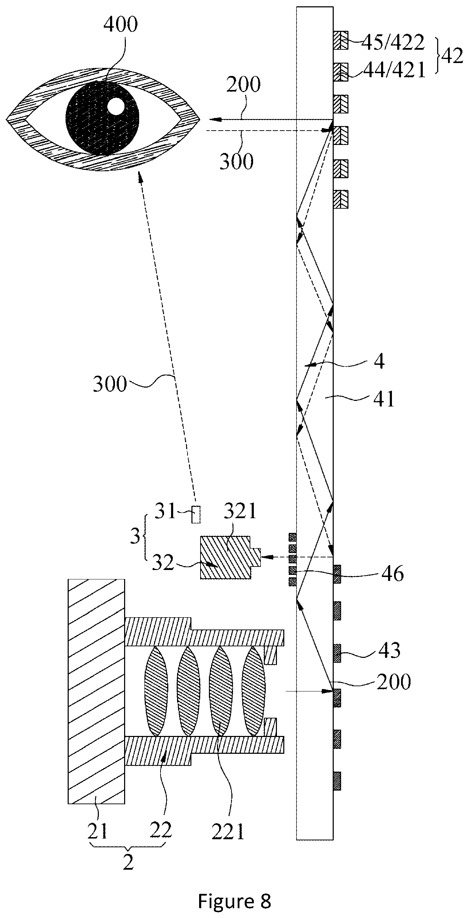

In a second specific implementation of the first embodiment, as shown in FIGS. 8 and 11, the difference from the first specific implementation lies in that the second coupling-in grating 45 is coplanar with and at least partially overlaps with the first coupling-out grating 44, and the second coupling-out grating 46 is non-coplanar with the first coupling-in grating 43.

In the second specific implementation, the second coupling-in grating 45 and the first coupling-out grating 44 may partially overlap or completely overlap. Similarly, when the second coupling-out grating 46 is non-coplanar with the first coupling-in grating 43, they may partially overlap, completely overlap, or be completely offset from each other, which may be determined according to actual requirements.

It should be understood that in the second specific implementation, since only the second coupling-in grating 45 is coplanar with the first coupling-out grating 44, the second coupling-in grating 45 and the first coupling-out grating 44 together form a composite grating 42 only when the second coupling-in grating 45 is coplanar with and partially overlaps with, or is coplanar with and completely overlaps with the first coupling-out grating 44. Briefly, in the present specific implementation, one composite grating 42 may be provided, the second coupling-in grating 45 and the first coupling-out grating 44 together form the one composite grating 42, and the first coupling-out grating 44 and the second coupling-in grating 45 are respectively the first periodic grating 421 and the second periodic grating 422 of the composite grating 42.

For example, as shown in FIGS. 8 and 11, the second coupling-in grating 45 is coplanar with and completely overlaps with the first coupling-out grating 44, and the second coupling-out grating 46 is non-coplanar with and partially overlaps with the first coupling-in grating 43.

Specifically, in this example, as shown in FIGS. 8 and 11 again, the first coupling-out grating 44, the second visible light grating region 441 corresponding to the first coupling-out grating 44, the second coupling-in grating 45, and the first infrared light grating region 451 corresponding to the second coupling-in grating 45 are all located in the first grating region 4131 of the viewing zone 413 of the waveguide substrate 41 and directly in front of the eye 400; and the second coupling-in grating 45 and the first coupling-out grating 44 are located on the same side of the waveguide substrate 41, and the first infrared light grating region 451 corresponding to the second coupling-in grating 45 and the second visible light grating region 441 corresponding to the first coupling-out grating 44 completely overlap.

The first coupling-in grating 43, the first visible light grating region 431 corresponding to the first coupling-in grating 43, the second coupling-out grating 46, and the second infrared light grating region 461 corresponding to the second coupling-out grating 46 are all located in the second grating region 4141 of the blind zone 414 of the waveguide substrate 41. The second coupling-out grating 46 and the first coupling-in grating 43 are located on opposite sides of the waveguide substrate 41, and the projection of the second infrared light grating region 461 corresponding to the second coupling-out grating 46 is partially located within the first visible light grating region 431 corresponding to the first coupling-in grating 43 (referring to FIG. 11).

For another example, both the first coupling-in grating 43 and the first coupling-out grating 44 are reflective diffraction gratings, the second coupling-in grating 45 is a reflective diffraction grating, and the second coupling-out grating 46 is a transmissive diffraction grating. The reflective diffraction gratings herein include but are not limited to surface relief gratings or volume holographic gratings, and the transmissive diffraction gratings include but are not limited to surface relief gratings or volume holographic gratings.

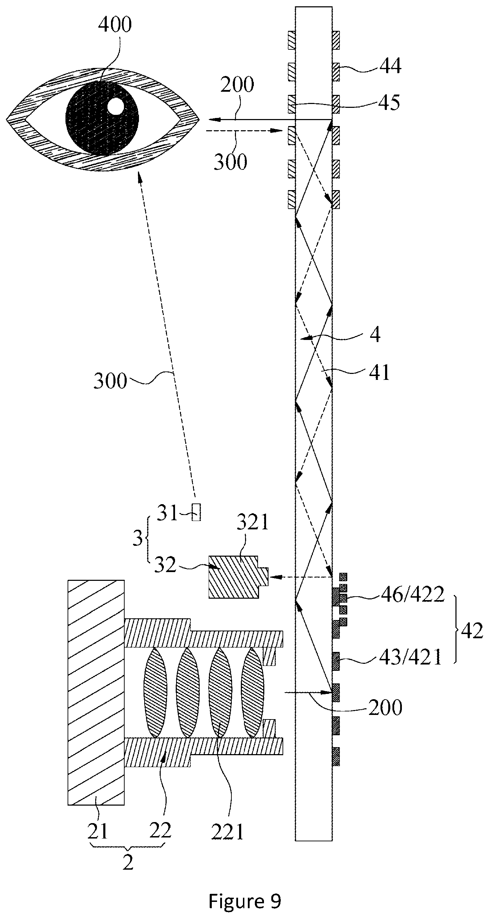

In a third specific implementation of the first embodiment, as shown in FIGS. 9 and 11, the difference from the first specific implementation lies in that the second coupling-in grating 45 is non-coplanar with the first coupling-out grating 44, and the second coupling-out grating 46 is coplanar with and at least partially overlaps with the first coupling-in grating 43.

In the third specific implementation, the second coupling-in grating 45 and the first coupling-out grating 44 may be completely offset from each other, partially overlap, or completely overlap; and in order to form the composite grating 42, when the second coupling-out grating 46 is coplanar with the first coupling-in grating 43, they may partially overlap or completely overlap, which may be determined according to actual requirements.

It should be understood that in the third specific implementation, since only the second coupling-out grating 46 is coplanar with the first coupling-in grating 43, the second coupling-out grating 46 and the first coupling-in grating 43 together form a composite grating 42 only when the second coupling-out grating 46 is coplanar with and partially overlaps with, or is coplanar with and completely overlaps with the first coupling-in grating 43. Briefly, in the present specific implementation, there may be one composite grating 42. The second coupling-out grating 46 and the first coupling-in grating 43 together form the one composite grating 42, where the first coupling-in grating 43 and the second coupling-out grating 46 are respectively the first periodic grating 421 and the second periodic grating 422 of the composite grating 42.

For example, as shown in FIGS. 9 and 11, the second coupling-in grating 45 is non-coplanar with and completely overlaps with the first coupling-out grating 44, and the second coupling-out grating 46 is coplanar with and partially overlaps with the first coupling-in grating 43.

Specifically, in this example, as shown in FIGS. 9 and 11 again, the first coupling-out grating 44, the second visible light grating region 441 corresponding to the first coupling-out grating 44, the second coupling-in grating 45, and the first infrared light grating region 451 corresponding to the second coupling-in grating 45 are all located in the first grating region 4131 of the viewing zone 413 of the waveguide substrate 41 and directly in front of the eye 400; and the second coupling-in grating 45 and the first coupling-out grating 44 are located on opposite sides of the waveguide substrate 41, and the first infrared light grating region 451 corresponding to the second coupling-in grating 45 and the second visible light grating region 441 corresponding to the first coupling-out grating 44 completely overlap.

The first coupling-in grating 43, the first visible light grating region 431 corresponding to the first coupling-in grating 43, the second coupling-out grating 46, and the second infrared light grating region 461 corresponding to the second coupling-out grating 46 are all located in the second grating region 4141 of the blind zone 414 of the waveguide substrate 41. The second coupling-out grating 46 and the first coupling-in grating 43 are located on the same side of the waveguide substrate 41, and the projection of the second infrared light grating region 461 corresponding to the second coupling-out grating 46 is partially located within the first visible light grating region 431 corresponding to the first coupling-in grating 43 (referring to FIG. 11).

For another example, both the first coupling-in grating 43 and the first coupling-out grating 44 are reflective diffraction gratings, the second coupling-in grating 45 is a transmissive diffraction grating, and the second coupling-out grating 46 is a reflective diffraction grating. The reflective diffraction gratings herein include, but are not limited to, surface relief gratings or volume holographic gratings, and the transmissive diffraction gratings include, but are not limited to, surface relief gratings or volume holographic gratings.

In the first embodiment of the present application, as shown in FIGS. 2, 8 and 9, the imaging optical module 2 includes an image source 21 and an image forming unit 22. The image forming unit 22 is mainly configured to form an image from the imaging light rays 200 emitted by the image source 21 and project the imaged imaging light rays 200 to the first coupling-in grating 43 disposed on the waveguide substrate 41.

In addition, the image forming unit 22 includes an image lens 221. In the mounting cavity of the connecting part 12 of the frame 1, corresponding to the blind zone 414 of the waveguide substrate 41, the image lens 221 is disposed on the light exit side of the image source 21, that is, the image lens 221 is located between the image source 21 and the waveguide substrate 41. Preferably, in order to achieve a better image effect, the image lens 221 is perpendicular to the image source 21 and the waveguide substrate 41.

It should be noted that the image source 21 may be a micro LED chip, OLED chip, LCOS chip, SLM chip, or other types of chips. Specifically, in this embodiment, the image source 21 is preferably a self-luminous chip, such as a micro LED chip.

In the first embodiment of the present application, as shown in FIGS. 2, 8 and 9, the pupil imaging device 32 of the eye-tracking optical module 3 includes a pupil camera 321. To achieve a better eye-tracking effect, on the side of the frame 1 corresponding to the imaging optical module 2, the pupil camera 321 is arranged side by side with the imaging optical module 2 in the mounting cavity of the same connecting part 12 of the frame 1. Preferably, the pupil camera 321 is disposed perpendicular to the corresponding waveguide substrate 41 at a position corresponding to the blind zone 414 of the waveguide substrate 41.

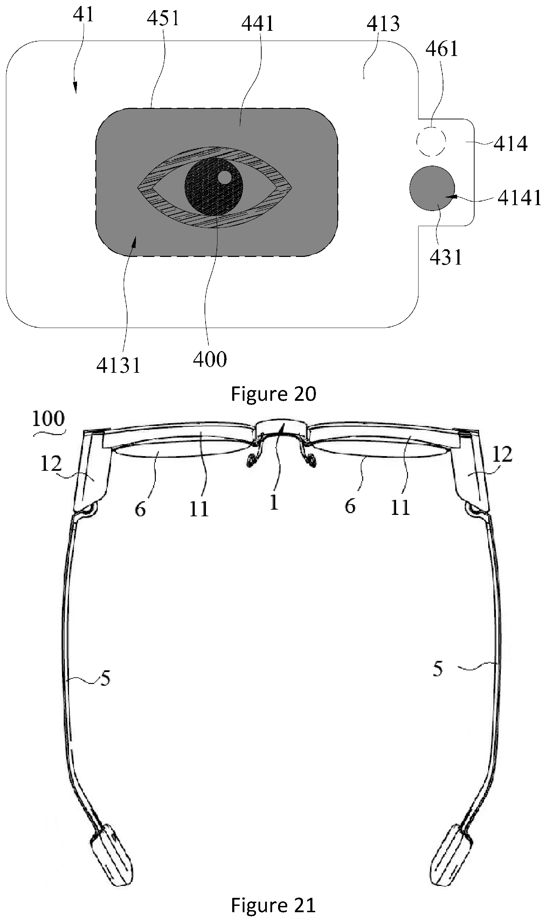

It should be noted that the pupil camera 321 may be one or more of various environmental detection cameras used for attitude tracking and positioning, such as TOF (Time-Of-Flight) cameras and RGB cameras, which are not specifically limited herein.
in the first embodiment of the present application, as shown in FIGS. 1 and 21, the smart glasses 100 further include temples 5. In one specific implementation, the temples 5 are connected to the rims 11 via the connecting parts 12. For example, the temple 5 and the connecting part 12 may be integrally formed, or the temple 5 and the connecting part 12 may be pivotally connected by means of a pivot structure to enable the temple 5 to be folded, facilitating the storage of the smart glasses 100.

Alternatively, in another specific implementation, the smart glasses 100 further include a strap (not shown) that can be secured around a head, where one end of the strap is connected to one connecting part 12 of the frame 1, and the other end is connected to the other connecting part 12 of the frame 1. Specifically, the strap may preferably be an elastic or bendable strip-shaped strap.

For example, the left end of the strap is connected to the connecting part 12 at the left end of the frame 1, and the right end of the strap is connected to the connecting part 12 at the right end of the frame 1. In addition, for the convenience of wearing, a middle section of the strap may be detachable, that is, the strap includes two small strip-shaped straps, which may be detachably connected through Velcro, or snap-connected through buckles and buttonholes, etc. Certainly, the middle section of the strap may also be non-detachable, that is, the strap is a single strip-shaped strap.

It should be noted that the temples 5 and the frame 1 may be made of materials including, but not limited to, pure metal, alloy, plastic, or resin, and the structure of the temples 5 may not be limited to the structure shown in FIG. 21.

### Second embodiment of the smart glasses 100 of the present application

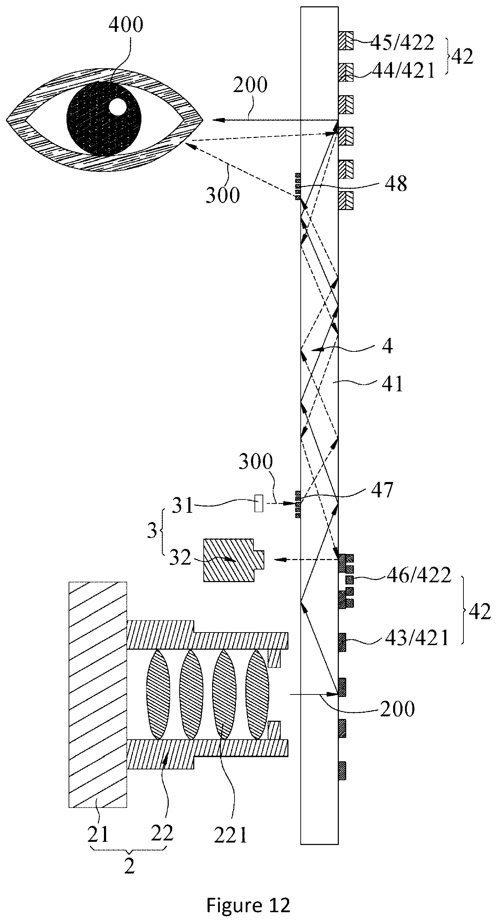

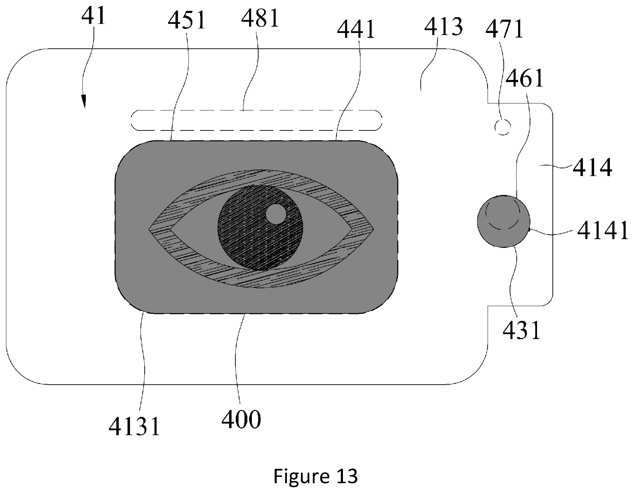

As shown in FIGS. 12 and 13, the main technical features of the second embodiment are substantially the same as those of the first embodiment, and the main difference from first embodiment lies in that the second coupling-in and coupling-out grating group further includes a third coupling-in grating 47 and a third coupling-out grating 48 disposed on the waveguide substrate 41, and the third coupling-in grating 47 is located on the same side as or the opposite side to the first coupling-in grating 43; and the third coupling-out grating 48 is located on the same side as or the opposite side to the first coupling-out grating 44.

The third coupling-in grating 47 is mainly configured to couple the infrared light rays 300 emitted by the light source 31 of the eye-tracking optical module 3 into the waveguide substrate 41; and the third coupling-out grating 48 is mainly configured such that the infrared light rays 300 propagating through the waveguide substrate 41 are coupled out of the waveguide substrate 41 and then enter the eye 400.

It should be understood that in the second embodiment, the infrared light rays 300 emitted by the light source 31 of the eye-tracking optical module 3 propagate through the waveguide substrate 41 before being projected to the eye 400, instead of being directly incident on the eye 400. In other words, an illumination optical path of the light source 31 is also integrated into the optical path of the waveguide substrate 41, and the infrared light rays are projected to the eye 400 from in front of the eye 400 through the third coupling-out grating 48. Obviously, compared with the solution in which the light source 31 obliquely projects the infrared light rays 300 to the eye 400, the infrared light rays 300 emitted by the light source 31 in the second embodiment have improved illumination angle and irradiation range and uniformity, which is conducive for the eye-tracking optical module 3 to use fewer light sources 31 and/or pupil imaging devices 32 to achieve the same or better eye-tracking effect as the conventional solution. Therefore, it is conducive to further reducing the weight and volume of the smart glasses 100, simplifying the arrangement of devices on the frame 1 proximate to the eye, and reducing the manufacturing cost.

In the second embodiment, the region corresponding to the third coupling-in grating 47 is referred to as a third infrared light grating region 471, which is located in the second grating region 4141 within the blind zone 414 of the waveguide substrate 41; and the region corresponding to the third coupling-out grating 48 is referred to as a fourth infrared light grating region 481, and is located in the first grating region 4131 within the viewing zone 413 of the waveguide substrate 41.

When the third coupling-in grating 47 and the first coupling-in grating 43 are located on the same side of the same waveguide substrate 41, within the second grating region 4141 of the blind zone 414, the region range of the third infrared light grating region 471 corresponding to the third coupling-in grating 47 and the first visible light grating region 431 corresponding to the first coupling-in grating 43 may completely overlap, partially overlap, or be completely offset from each other. Similarly, when the third coupling-out grating 48 and the first coupling-out grating 44 are located on the same side of the same waveguide substrate 41, the region ranges of the fourth infrared light grating region 481 corresponding to the third coupling-out grating 48 and the second visible light grating region 441 corresponding to the first coupling-out grating 44 may be completely overlap, partially overlap, or be completely offset from each other within the first grating region 4131 of the viewing zone 413. Briefly, it is only necessary to ensure that the distribution regions of the gratings and the corresponding coupling-in and coupling-out angles of the light rays can avoid optical path interference or occlusion between the infrared light rays 300 and the imaging light rays 200.

It should be noted that if the third coupling-in grating 47 and the first coupling-in grating 43 are located on the same side of the same waveguide substrate 41, and the region ranges of the third infrared light grating region 471 corresponding to the third coupling-in grating 47 and the first visible light grating region 431 corresponding to the first coupling-in grating 43 partially overlap or completely overlap, the third coupling-in grating 47 and the first coupling-in grating 43 may also be combined to form a composite grating 42. If the third coupling-out grating 48 and the first coupling-out grating 44 are located on the same side of the same waveguide substrate 41, and the region ranges of the fourth infrared light grating region 481 corresponding to the third coupling-out grating 48 and the second visible light grating region 441 corresponding to the first coupling-out grating 44 partially overlap or completely overlap, the third coupling-out grating 48 and the first coupling-out grating 44 may also be combined to form a composite grating 42, so that the infrared light rays 300 directly emitted by the light source 31 and the first grating carrying image information can be independently coupled into and/or coupled out of the waveguide substrate 41 in the same region of the composite grating 42.

For example, as shown in FIG. 12, compared with the operating principles of the smart glasses 100 in the first embodiment, the main difference in the operating principles of the smart glasses 100 in the second embodiment lies in that the light source 31 of the eye-tracking optical module 3 projects the infrared light rays 300 to the eye 400 in a different manner specifically as follows.

In the second embodiment, as shown in FIG. 12, the light source 31 of the eye-tracking optical module 3 projects infrared light rays 300 (specifically, infrared rays) into the third coupling-in grating 47 disposed in the blind zone 414 of the waveguide substrate 41 within the mounting cavity. The third coupling-in grating 47 couples the infrared light rays 300 into a functional layer of the waveguide substrate 41, and the infrared light rays propagate within the functional layer of the waveguide substrate 41 at a specific incident angle to the first grating region 4131 within the viewing zone 413 of the waveguide substrate 41 by total reflection. Then, the infrared light rays 300 is coupled out of the waveguide substrate 41 from the front of the eye 400 through the third coupling-out grating 48 in the first grating region 4131, so that the infrared light rays 300 are finally directly projected to the eye 400 from the front of the eye 400.

For another example, as shown in FIG. 12, in the first specific implementation of the first embodiment, the third coupling-in grating 47 is located on the opposite side to the first coupling-in grating 43, and the third coupling-out grating 48 is located on the opposite side to the first coupling-out grating 44.

Specifically, as shown in FIGS. 12 and 13, the third coupling-in grating 47, the third infrared light grating region 471 corresponding to the third coupling-in grating 47, the second coupling-out grating 46, the second infrared light grating region 461 corresponding to the second coupling-out grating 46, the first coupling-in grating 43, and the first visible light grating region 431 corresponding to the first coupling-in grating 43 are all located in the second grating region 4141 of the blind zone 414 of the waveguide substrate 41. The light source 31 of the eye-tracking optical module 3 and the imaging optical module 2 are located on the same side of the waveguide substrate 41, the third coupling-in grating 47 is located on the opposite side to the first coupling-in grating 43 and the second coupling-out grating 46, and the third infrared light grating region 471 corresponding to the third coupling-in grating 47 is completely offset from the second infrared light grating region 461 corresponding to the second coupling-out grating 46 (referring to FIG. 13).

The third coupling-out grating 48, the fourth infrared light grating region 481 corresponding to the third coupling-out grating 48, the second coupling-in grating 45, the first infrared light grating region 451 corresponding to the second coupling-in grating 45, the first coupling-out grating 44, and the second visible light grating region 441 corresponding to the first coupling-out grating 44 are all located in the first grating region 4131 of the viewing zone 413 of the waveguide substrate 41. The third coupling-out grating 48 is located on the opposite side to the first coupling-out grating 44 and the second coupling-in grating 45, and the fourth infrared light grating region 481 corresponding to the third coupling-out grating 48 is completely offset from the first infrared light grating region 451 corresponding to the second coupling-in grating 45 (referring to FIG. 13).

In the second embodiment, the first coupling-in grating 43 and the first coupling-out grating 44 are reflective diffraction gratings. In addition, when the second coupling-in grating 45 is located on the same side as the first coupling-out grating 44, the second coupling-in grating 45 is a reflective diffraction grating; or when the second coupling-in grating 45 is located on an opposite side to the first coupling-out grating 44, the second coupling-in grating 45 is a transmissive diffraction grating.

When the second coupling-out grating 46 is located on the same side as the first coupling-in grating 43, the second coupling-out grating 46 is a reflective diffraction grating; or when the second coupling-out grating 46 is located on an opposite side to the first coupling-in grating 43, the second coupling-out grating 46 is a transmissive diffraction grating.

When the third coupling-in grating 47 is located on the same side as the first coupling-in grating 43, the third coupling-in grating 47 is a reflective diffraction grating; or when the third coupling-in grating 47 is located on an opposite side to the first coupling-in grating 43, the third coupling-in grating 47 is a transmissive diffraction grating.

When the third coupling-out grating 48 is located on the same side as the first coupling-out grating 44, the third coupling-out grating 48 is a reflective diffraction grating; or when the third coupling-out grating 48 is located on an opposite side to the first coupling-out grating 44, the third coupling-out grating 48 is a transmissive diffraction grating.

For example, in the first specific implementation of the second embodiment, both the first coupling-in grating 43 and the first coupling-out grating 44 are reflective diffraction gratings. The reflective diffraction gratings include, but are not limited to, surface relief gratings or volume holographic gratings. The second coupling-in grating 45, the second coupling-out grating 46, the third coupling-in grating 47, and the third coupling-out grating 48 are all transmissive diffraction gratings. The transmissive diffraction gratings include, but are not limited to, surface relief gratings or volume holographic gratings.

It should be noted that in a second specific implementation of the second embodiment, the light source 31 of the eye-tracking optical module 3 and the imaging optical module 2 may also be located on opposite sides of the waveguide substrate 41, respectively. The operating principles of the second specific implementation are the same as the operating principles of the first specific implementation, and will not be repeated here.

### Third embodiment of the smart glasses 100 of the present application

The main technical features of the third embodiment are substantially the same as those of the first embodiment and the second embodiment described above, and the main difference lies that the imaging optical module 2 has a different specific structure specifically as follows.

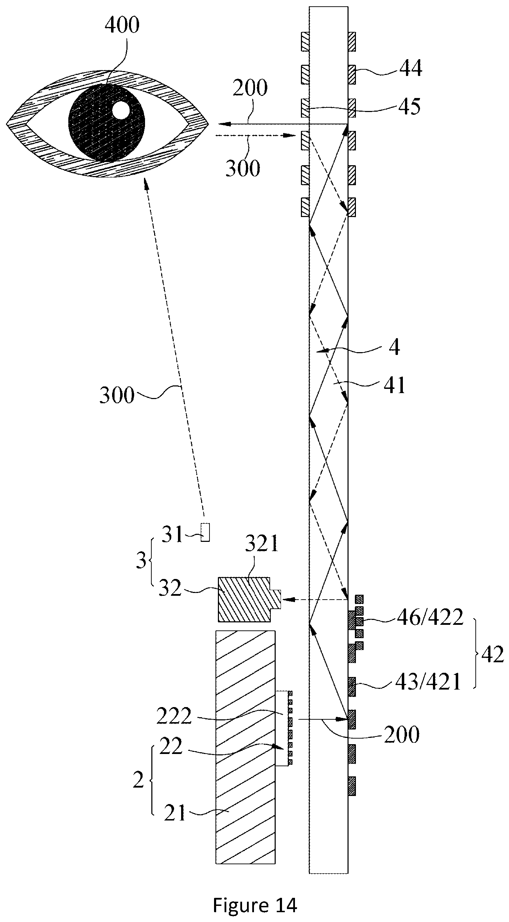

As shown in FIG. 14, in order to further simplify the structure of the smart glasses 100 and reduce the volume and weight thereof, as shown in FIG. 11, the image forming unit 22 of the imaging optical module 2 includes at least one metasurface lens 222. The metasurface lens 222 is disposed on the light exit side of the image source 21.

It should be understood that in the fourth embodiment, one or more metasurface lenses 222, or a combination of ordinary lenses and at least one metasurface lens 222, are mainly used to replace the image lens 221 of the image forming unit 22 in the first embodiment and the second embodiment described above, thereby further reducing the volume and weight of the smart glasses 100, which is conducive to the further improvement of the wearing comfort of the user.

### Fourth embodiment of the smart glasses 100 of the present application

The main technical features of the fourth embodiment are substantially the same as those of the first embodiment, the second embodiment and the third embodiment described above, and the main difference lies in that the pupil imaging device 32 of the eye-tracking optical module 3 has a different structure and arrangement specifically as follows.

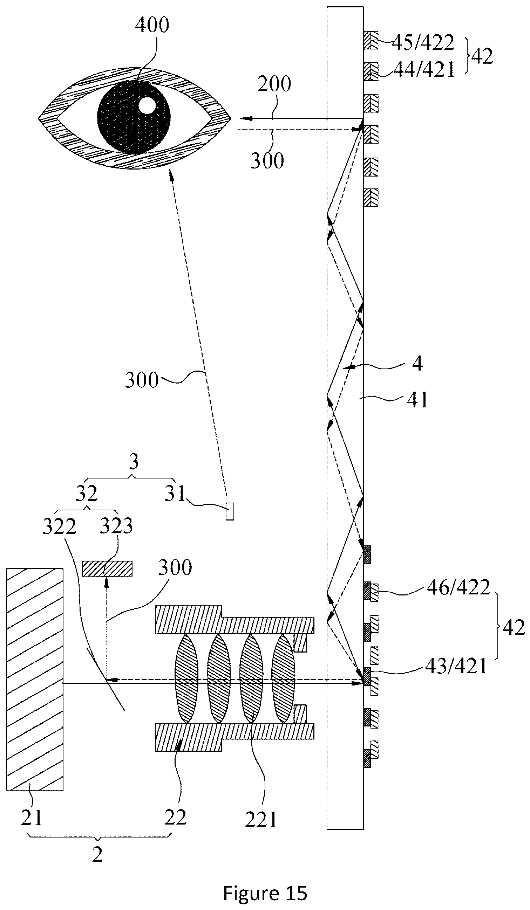

As shown in FIGS. 15 to 18, in the fourth embodiment, in order to further simplify the arrangement of devices on the frame 1 of the smart glasses 100 proximate to the eye, that is, on the rim 11, the pupil imaging device 32 of the eye-tracking optical module 3 includes a dichroic mirror 322 and a pupil photosensitive element 323. At the position corresponding to the blind zone 414 of the waveguide substrate 41, the imaging light rays 200 emitted by the image source 21 of the imaging optical module 2 are transmitted through the dichroic mirror 322 to enter the image forming unit 22 of the imaging optical module 2; The infrared light rays 300 are coupled out of the waveguide substrate 41 through the second coupling-out grating 46, are sequentially incident on the image forming unit 22 and the dichroic mirror 322, and are reflected by the dichroic mirror 322 to reach the pupil photosensitive element 323.

It should be understood that in the fourth embodiment, the pupil imaging device 32 of the eye-tracking optical module 3 is integrated into the imaging optical module 2. Specifically, the image lens 221 of the pupil imaging device 32 is replaced with the dichroic mirror 322 and the pupil photosensitive element 323, and the dichroic mirror 322 and the pupil photosensitive element 323 are disposed between the image source 21 and the image forming unit 22 of the imaging optical module 2, so as to integrate pupil imaging functional components of the pupil imaging device 32 into the imaging optical module 2. This is conducive to reducing the number of pupil cameras 321 of the eye-tracking optical module 3 and simplify the arrangement of devices on the rim 11.

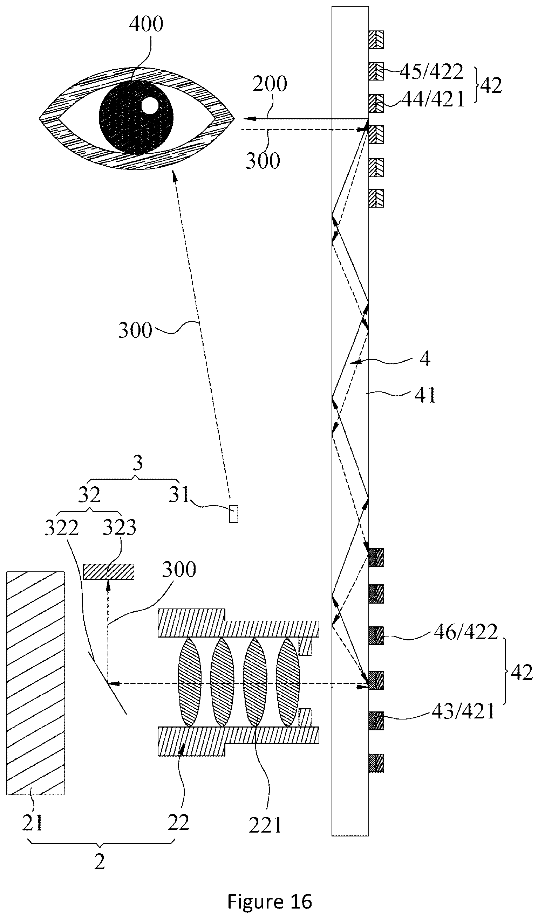

For example, as shown in FIGS. 15 and 16, compared with the operating principles of the smart glasses 100 in the first embodiment, the second embodiment and the third embodiment described above, the main difference in the operating principles of the smart glasses 100 in the fourth embodiment lies in the different manner and path by which the imaging light rays 200 emitted by the image source 21 is projected to the first coupling-in grating 43 and the different manner and path by which the pupil imaging device 32 of the eye-tracking optical module 3 receives the infrared light rays 300 carrying pupil information, which are specifically as follows.

The imaging light rays 200 carrying virtual image information emitted by the image source 21 (specifically, visible light 200) are transmitted through the dichroic mirror 322, and then incident on the second grating region 4141 in the blind zone 414 of the waveguide substrate 41 through the image forming unit 22 of the imaging optical module 2. The imaging light rays are sequentially coupled in through the first coupling-in grating 43, propagate within the functional layer of the waveguide substrate 41 by total reflection, and are coupled out of the waveguide substrate 41 through the first coupling-out grating 44 to finally reach the eye 400 for image formation.

In addition, the infrared light rays 300 carrying pupil information reflected by the eye 400 are sequentially coupled in through the second coupling-in grating 45, propagate within the functional layer of the waveguide substrate 41 by total reflection, are coupled out of the waveguide substrate 41 through the second coupling-out grating 46, are then incident on the dichroic mirror 322 through the image forming unit 22 of the imaging optical module 2, and are reflected to the pupil photosensitive element 323 through the dichroic mirror 322 for image formation.

It should be noted that in the imaging optical module 2, since a light exit path of the imaging light rays 200 is partially the same as a light incident path of the infrared light rays 300, in order to ensure the compactness of the structure of the smart glasses 100 and reduce the overall weight and volume, the first visible light grating region 431 corresponding to the first coupling-in grating 43 and the second infrared light grating region 461 corresponding to the second coupling-out grating 46 at least partially overlap in the blind zone 414 of the waveguide substrate 41.

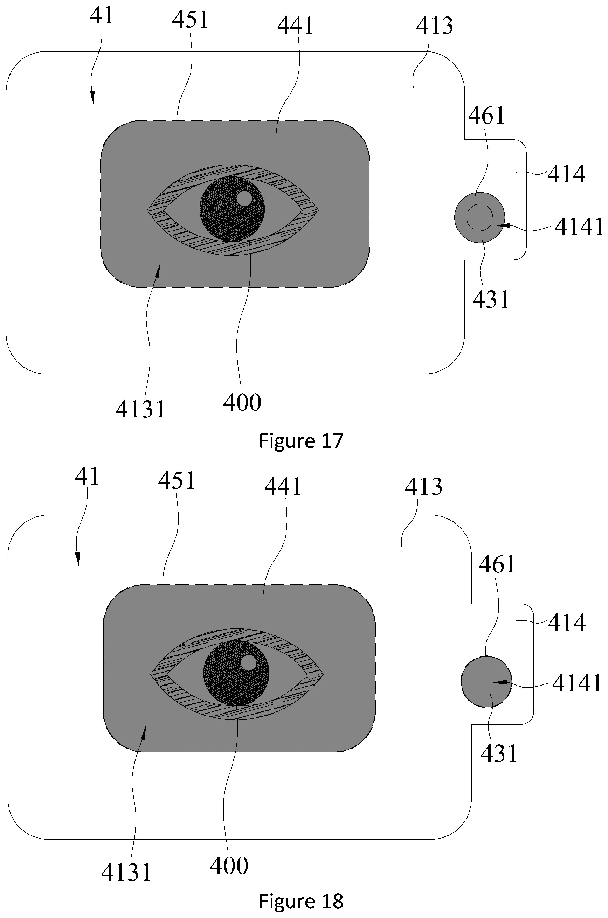

Specifically, in the first specific implementation, as shown in FIGS. 15 and 17, the projection of the second coupling-out grating 46 is completely located within the first visible light grating region 431 corresponding to the first coupling-in grating 43, and the area of the second infrared light grating region 461 corresponding to the second coupling-out grating 46 is smaller than the area of the first visible light grating region 431 corresponding to the first coupling-in grating 43.

Alternatively, in the second specific implementation, as shown in FIGS. 16 and 18, the first visible light grating region 431 corresponding to the first coupling-in grating 43 and the second infrared light grating region 461 corresponding to the second coupling-out grating 46 completely overlap.

It should also be noted that the pupil photosensitive element 323 can achieve good imaging on the light of the waveband ranging from 400 nm to 1200 nm. Preferably, the pupil photosensitive element 323 may be a CMOS or CCD. In addition, the dichroic mirror 322 has undergone special coating treatment, and as shown in FIGS. 15 and 16. Specifically, in the fourth embodiment, the dichroic mirror 322 is placed at 45° between a light-emitting surface of the image source 21 of the imaging optical module 2 and the image forming unit 22.

### Fifth embodiment of the smart glasses 100 of the present application

The main technical features of the fifth embodiment are substantially the same as those of the first embodiment, the second embodiment, the third embodiment and the fourth embodiment described above, and the main difference lies in the different structure of the waveguide substrate 41 and correspondingly the different propagation optical path of the infrared light rays 300 carrying pupil information in the waveguide substrate 41 specifically as follows.

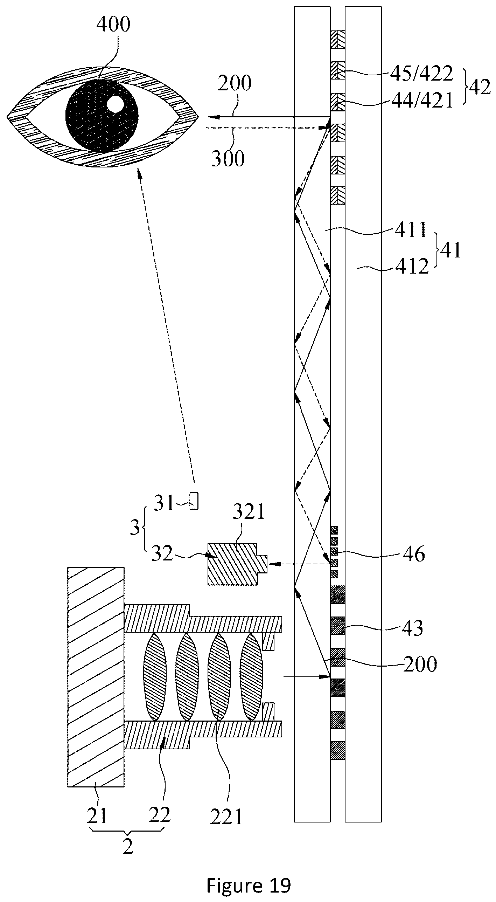

As shown in FIGS. 19 and 20, in the fifth embodiment, the waveguide substrate 41 is a multi-layer wave plate, and the first coupling-in and coupling-out grating group is located between two adjacent wave plates. It should be noted that the fifth embodiment can achieve the same effect as the first embodiment described above, except that the overall volume of the smart glasses 100 is slightly increased, but the technical difficulty is reduced.

In addition, in order to form the composite grating 42 on the waveguide substrate 41 and further reduce the volume and weight of the smart glasses 100, for example, as shown in FIG. 19, the second coupling-in and coupling-out grating group is also located between two adjacent wave plates, and is thus coplanar with and partially overlaps with at least one of the gratings corresponding to the first coupling-in and coupling-out grating group.

Preferably, as shown in FIG. 19 again, when the waveguide substrate 41 is a multi-layer wave plate, the waveguide substrate 41 includes a first waveguide layer 411 and a second waveguide layer 412, and the second waveguide layer 412 is stacked on the first waveguide layer 411 in the direction of thickness. The first coupling-in grating 43 and the first coupling-out grating 44 are disposed on the surface of the first waveguide layer 411 facing the second waveguide layer 412, that is, between the first waveguide layer 411 and the second waveguide layer 412. The second coupling-in grating 45 is coplanar with and at least partially overlaps with the first coupling-out grating 44, and/or, the second coupling-out grating 46 is coplanar with and at least partially overlaps with the first coupling-in grating 43.

It should be understood that both the second coupling-in grating 45 and the second coupling-out grating 46 are disposed between the first waveguide layer 411 and the second waveguide layer 412, that is, are respectively coplanar with the first coupling-out grating 44 and the first coupling-in grating 43.

For example, as shown in FIG. 19, the first coupling-in grating 43 is coplanar with but completely offsets from the second coupling-out grating 46 between the first waveguide layer 411 and the second waveguide layer 412, and the first coupling-out grating 44 is coplanar with and completely overlaps with the second coupling-in grating 45 to form another composite grating 42.

It should be understood that, as shown in FIGS. 19 and 20, the first coupling-in grating 43, the first visible light grating region 431 corresponding to the first coupling-in grating 43, the second coupling-out grating 46, and the second infrared light grating region 461 corresponding to the second coupling-out grating 46 are all located in the second grating region 4141 of the blind zone 414, and the first visible light grating region 431 is completely offset from the second infrared light grating region 461; and the first coupling-out grating 44, the second visible light grating region 441 corresponding to the first coupling-out grating 44, the second coupling-in grating 45, and the first infrared light grating region 451 corresponding to the second coupling-in grating 45 are all located in the first grating region 4131 of the viewing zone 413.

Certainly, in other cases, the first coupling-in grating 43 may also be coplanar with and at least partially overlap with the second coupling-out grating 46 to form a composite grating 42, and the first coupling-out grating 44 may be coplanar with and completely or partially overlap with the second coupling-in grating 45 to form another composite grating 42.

In summary, it should be understood that, in order to achieve the lightweight design of the smart glasses 100 while having the eye-tracking function, the smart glasses 100 can combine and replace at least two of the first embodiment, the second embodiment, the third embodiment, the fourth embodiment, the fifth embodiment, and the prior art. For example, different distribution area arrangements of gratings, different irradiation modes of the light source 31 of the eye-tracking optical module 3, the design of integration of the pupil imaging device 32 of the eye-tracking optical module 3 and the imaging optical module 2, the replacement of the image lens 221 with the metasurface lens 222, the replacement of the single-layer wave plate with the multi-layer wave plate, etc.

The above descriptions are only preferred embodiments of the present application and are not intended to limit the present application. For those skilled in the art, various modifications and changes can be made to the present application. Any modification, equivalent replacement, improvement, etc., made within the spirit and principle of the present application shall be included in the scope of the claims of the present application.

## Claims

1. A pair of smart glasses, **characterized by** comprising:
a frame comprising rims and a connecting part disposed on one side of each of the rims, a mounting cavity being formed in the connecting part;
an imaging optical module disposed in the mounting cavity and configured to emit imaging light rays carrying image information;
an eye-tracking optical module disposed in the mounting cavity and configured to emit infrared light rays and receive infrared light rays carrying pupil information; and
an waveguide assembly embedded in the rim, the waveguide assembly comprising a waveguide substrate and a first coupling-in and coupling-out grating group and a second coupling-in and coupling-out grating group disposed on the waveguide substrate, the first coupling-in and coupling-out grating group being configured to couple the imaging light rays into and out of the waveguide substrate, and the second coupling-in and coupling-out grating group being configured to couple the infrared light rays into and out of the waveguide substrate;
wherein at least some gratings in the first coupling-in and coupling-out grating group and the second coupling-in and coupling-out grating group are located on the same side of the waveguide substrate, and the gratings located on the same side of the waveguide substrate at least partially overlap;
on the same side of the waveguide substrate, a grating in the first coupling-in and coupling-out grating group at an overlapping position is referred to as a first periodic grating, a grating in the second coupling-in and coupling-out grating group corresponding to and overlapping with the first periodic grating is referred to as a second periodic grating, and a combination of the first periodic grating and the corresponding second periodic grating is referred to as a composite grating; and
the first periodic grating and the second periodic grating each comprise a substrate and a plurality of microstructure units periodically arranged in a one-dimensional direction or a two-dimensional direction, and the microstructure units of the first periodic grating and the microstructure units of the second periodic grating are alternately arranged on a projection plane of the substrate, so as to respectively and independently couple in or couple out the imaging light rays and the infrared light rays in the same region on the same side of the waveguide substrate through the first periodic grating and the second periodic grating.

2. The smart glasses according to claim 1, **characterized in that** the microstructure units of the first periodic grating are referred to as first microstructure units, the first periodic grating comprises a number N of first microstructure units, and the N first microstructure units are arranged in a lateral and/or longitudinal array;
in the first periodic grating, a length of a line connecting centers of two laterally adjacent first microstructure units is defined as a first lateral periodic length, a length of a line connecting centers of two longitudinally adjacent first microstructure units is defined as a first longitudinal periodic length, and an angle between the line connecting the centers of the two laterally adjacent first microstructure units and the line connecting the centers of the two longitudinally adjacent first microstructure units is defined as a first periodic unit interior angle, the first periodic unit interior angle ranging from 90° to 150°;
the microstructure units of the second periodic grating are referred to as second microstructure units, the second periodic grating comprises a number M of second microstructure units, and the M second microstructure units are arranged in a lateral and/or longitudinal array;
in the second periodic grating, a length of a line connecting centers of two laterally adjacent second microstructure units is defined as a second lateral periodic length, a length of a line connecting centers of two longitudinally adjacent second microstructure units is defined as a second longitudinal periodic length, and an angle between the line connecting the centers of the two laterally adjacent second microstructure units and the line connecting the centers of the two longitudinally adjacent second microstructure units is defined as a second periodic unit interior angle, the second periodic unit interior angle ranging from 90° to 150°; and
in the composite grating, the first periodic grating and the second periodic grating share the substrate at the overlapping position.

3. The smart glasses according to claim 2, **characterized in that** in the composite grating, the first microstructure units of the first periodic grating and the second microstructure units of the second periodic grating are spaced apart and alternately arranged on the projection plane of the substrate;
or the first microstructure units and the second microstructure units are alternately arranged on the projection plane of the substrate, and in a direction of height of the substrate, at least some of the first microstructure units are superimposed with corresponding second microstructure units in height.

4. The smart glasses according to claim 3, **characterized in that** in the composite grating, microstructure units at *x* have a total height H(*x*) satisfying a shape condition constraint defined by Equation (1) specifically as follows: $H \left(x\right) = {G}_{1} \left(x\right) + {G}_{2} \left(x\right)$
wherein *G*₁(*x*) represents a height of the first microstructure unit at *x*, *G*₂(*x*) represents a height of the second microstructure unit at *x*, and *G*₁(*x*) and *G*₂(*x*) respectively satisfy Equation (2) and Equation (3): ${G}_{1} \left(x\right) = \left\{\begin{matrix}{h}_{1} , if \left(mod\left(\left|x-{x}_{1}\right|, {P}_{1}\right)\leq {P}_{1}/2\right. \\ 0 , else\end{matrix}\right.$ ${G}_{2} \left(x\right) = \left\{\begin{matrix}{h}_{2} , if \left(mod\left(\left|x-{x}_{2}\right|, {P}_{2}\right)\leq {P}_{2}/2\right. \\ 0 , else\end{matrix}\right.$
wherein in Equation (2), *h*₁ represents the height of the first microstructure unit, *x*₁ represents a lateral offset distance of the first microstructure unit, and *P*₁ represents a period of the first periodic grating; and in Equation (3), *h*₂ represents the height of the second microstructure unit, *x*₂ represents a lateral offset distance of the second microstructure unit, and *P*₂ represents a period of the second periodic grating; and
in the composite grating, a diffraction angle of the imaging light rays is greater than a critical angle of total reflection of the waveguide substrate, an incident angle of the infrared light rays is greater than the critical angle of total reflection of the waveguide substrate, and both the first periodic grating and the second periodic grating satisfy Equation (4): $P \left(sini\pm sinθ\right) = mλ$
wherein in Equation (4), P represents the grating period, and *i* represents an incident angle of corresponding light rays; ± represents different diffraction spectrum types, a plus sign being taken in response to incident light and diffracted light being located on the same side of a normal of a corresponding grating, and a minus sign being taken in response to incident light and diffracted light being located on opposite sides; and θ represents a diffraction angle of the corresponding light rays, *m* represents a diffraction order, and λ represents a wavelength of incident light of the corresponding light rays.

5. The smart glasses according to claim 2, **characterized in that** the first lateral periodic length ranges from 150 nm to 2 um, and the first longitudinal periodic length ranges from 150 nm to 2 um.

6. The smart glasses according to claim 2, **characterized in that** the first microstructure unit has a side length ranging from 150 nm to 2 um and a height ranging from 10 nm to 2 um.

7. The smart glasses according to claim 2, **characterized in that** a second lateral periodic length, a second longitudinal periodic length and a second periodic unit interior angle of the second periodic grating are equal to the first lateral periodic length, the first longitudinal periodic length and the first periodic unit interior angle, respectively.

8. The smart glasses according to claim 1, **characterized in that** the first periodic grating and the second periodic grating each have a thickness ranging from 10 nm to 2 um.

9. The smart glasses according to any one of claims 1 to 8, **characterized in that** the first coupling-in and coupling-out grating group comprises a first coupling-in grating and a first coupling-out grating located on the same side of the waveguide substrate, the second coupling-in and coupling-out grating group comprises a second coupling-in grating and a second coupling-out grating, and the eye-tracking optical module comprises a light source and a pupil imaging device, the light source being configured to emit infrared light rays toward an eye; and
the second coupling-in grating is configured to couple infrared light rays reflected by the eye to the waveguide substrate for propagation, the second coupling-out grating is configured such that the infrared light rays propagating through the waveguide substrate are coupled out of the waveguide substrate, and the pupil imaging device is configured to receive the infrared light rays carrying pupil information emitted from the waveguide substrate.

10. The smart glasses according to claim 9, **characterized in that** the second coupling-in grating and the first coupling-out grating are located directly in front of the eye, the second coupling-in grating is non-coplanar with the first coupling-out grating, and the second coupling-out grating is coplanar with and at least partially overlaps with the first coupling-in grating;
or the second coupling-in grating is coplanar with and at least partially overlaps with the first coupling-out grating, and the second coupling-out grating is coplanar or non-coplanar with the first coupling-in grating.

11. The smart glasses according to claim 10, **characterized in that** the second coupling-in grating is coplanar with and completely overlaps with the first coupling-out grating, and the second coupling-out grating is coplanar with and at least partially overlaps with the first coupling-in grating.

12. The smart glasses according to claim 10, **characterized in that** the light source directly emits the infrared light rays toward the eye, or the second coupling-in and coupling-out grating group further comprises a third coupling-in grating and a third coupling-out grating disposed on the waveguide substrate, the third coupling-in grating being located on the same side as or an opposite side to the first coupling-in grating, and the third coupling-out grating being located on the same side as or an opposite side to the first coupling-out grating; and
the third coupling-in grating is configured to couple the infrared light rays emitted by the light source into the waveguide substrate, and the third coupling-out grating is configured such that the infrared light rays propagating through the waveguide substrate are coupled out of the waveguide substrate and then enter the eye.

13. The smart glasses according to claim 12, **characterized in that** the imaging optical module comprises an image source and an image forming unit, wherein the image forming unit is configured to form an image from the imaging light rays emitted by the image source and to direct the imaging light rays after image formation to the first coupling-in grating; and
the image forming unit comprises an image lens disposed on a light exit side of the image source;
or the image forming unit comprises at least one metasurface lens disposed on the light exit side of the image source.

14. The smart glasses according to claim 13, **characterized in that** the pupil imaging device comprises a pupil camera arranged side by side with the imaging optical module;
or the pupil imaging device comprises a dichroic mirror and a pupil photosensitive element, and the imaging light rays emitted by the image source are transmitted straight through the dichroic mirror and then enter the image forming unit; and the infrared light rays coupled out of the waveguide substrate through the second coupling-out grating are sequentially incident on the image forming unit and the dichroic mirror, and are then reflected by the dichroic mirror to reach the pupil photosensitive element.

15. The smart glasses according to any one of claims 9 to 14, **characterized in that** the waveguide substrate is a single-layer wave plate; or the waveguide substrate is a multi-layer wave plate, and the first coupling-in and coupling-out grating group is located between two adjacent waveguide substrates.

16. The smart glasses according to claim 15, **characterized in that** in response to the waveguide substrate being a multi-layer wave plate, the waveguide substrate comprises a first waveguide layer and a second waveguide layer stacked on the first waveguide layer, and the first coupling-in grating and the first coupling-out grating are disposed on a surface of the first waveguide layer facing the second waveguide layer; and the second coupling-in grating is coplanar with and at least partially overlaps with the first coupling-out grating, and/or the second coupling-out grating is coplanar with and at least partially overlaps with the first coupling-in grating.

17. The smart glasses according to claim 1, **characterized in that** the waveguide substrate has a thickness ranging from 0.2 mm to 10 mm.

18. The smart glasses according to claim 1, **characterized by** further comprising a temple connected to each of the rims by means of the connecting part;
or further comprising a strap that is securable around a head, one end of the strap being connected to one of the connecting parts of the frame, and the other end of the strap being connected to the other connecting part of the frame.

19. The smart glasses according to claim 18, **characterized in that** the temple and the connecting part are integrally formed; or the temple is pivotally connected to the connecting part.
